(19) Europäisches Patentamt / European Patent Office / Office européen des brevets

(11) **EP 2 176 680 B1**

(12) **FASCICULE DE BREVET EUROPEEN**

(45) Date de publication et mention de la délivrance du brevet:
**07.03.2012 Bulletin 2012/10**

(21) Numéro de dépôt: **08787061.4**

(22) Date de dépôt: **08.08.2008**

(51) Int Cl.:
***G01S 7/292*** *(2006.01)*

(86) Numéro de dépôt international:
**PCT/EP2008/060472**

(87) Numéro de publication internationale:
**WO 2009/019313 (12.02.2009 Gazette 2009/07)**

(54) **PROCEDES ET DISPOSITIFS POUR DETERMINER LA REPONSE IMPULSIONNELLE DE CANAUX DE PROPAGATION IMPLIQUANT DES EMETTEURS, DES REFLECTEURS ET DES CAPTEURS FIXES OU MOBILES**

VERFAHREN UND VORRICHTUNGEN ZU BESTIMMUNG DER IMPULSREAKTION VON ÜBERTRAGUNGSKANÄLEN MIT FIXEN ODER MOBILEN SENDERN, REFLEKTOREN UND SENSOREN

METHODS AND DEVICES FOR DETERMINING THE IMPULSE RESPONSE OF PROPAGATION CHANNELS INVOLVING EMITTERS, REFLECTORS AND SENSORS THAT ARE FIXED OR MOBILE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **08.08.2007 FR 0705772**

(43) Date de publication de la demande:
**21.04.2010 Bulletin 2010/16**

(73) Titulaire: **THALES**
**92200 Neuilly-sur-Seine (FR)**

(72) Inventeurs:
• **CHEVALIER, Pascal**
  **F-92400 Courbevoie (FR)**

• **DELAVEAU, François**
  **F-94170 Le Perreux Sur Marne (FR)**
• **PIPON, François**
  **F-75018 Paris (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 665 665      EP-A- 1 500 951**
**FR-A- 2 854 290      FR-A- 2 882 479**

EP 2 176 680 B1

**Description**

La présente invention concerne un procédé permettant d'évaluer certains paramètres de la réponse impulsionnelle du canal de propagation des ondes électromagnétiques ou acoustiques, lorsque celle ci fait intervenir des émetteurs, capteurs et réflecteurs fixes ou mobiles, au moyen d'une fonction d'ambiguïtés conjointe Espace/retard-Distance/Doppler-cinématique, pour la détection et la détermination des paramètres de position et de cinématique des émetteurs et des réflecteurs.

Elle est utilisée dans de nombreux domaines de l'électromagnétisme et de l'acoustique, en détection, en transmission, en localisation et navigation, afin d'améliorer la connaissance du milieu de propagation, d'améliorer en conséquence les traitements des signaux utiles, l'ingénierie des réseaux de radiocommunication et de radiodiffusion, le contrôle aérien, le contrôle littoral, etc.

Elle peut s'appliquer pour l'auto localisation d'un système de réception mettant en oeuvre l'invention.

Elle est utilisée, par exemple, pour des émetteurs, réflecteurs et des capteurs fixes ou mobiles en électromagnétisme et en acoustique.

Les systèmes de mesure de propagation, de sondage, de détection et localisation de réflecteurs électromagnétiques ou acoustiques conventionnels sont le plus souvent actifs et utilisent en général :

- un balayage mécanique avec une antenne directive (réflecteur parabolique par exemple) ou un balayage électronique avec un faisceau formé à partir d'un réseau de capteurs pondérés en phase et en amplitude, et

- pour chaque position de pointage (ou case spatiale) du faisceau :

    o l'émission de signaux connus, soit continus, soit impulsionnels, soit sous forme de trains d'impulsions connus,

    o le calcul d'une fonction d'ambiguïtés Distance/Vitesse basée, dans le cas de signaux en bande étroite, sur la corrélation, avec les signaux émis, des signaux observés en sortie d'antenne et décalés en temps et fréquence, et basée dans le cas de signaux en bande large, sur la corrélation, avec les signaux émis, des signaux observés en sortie d'antenne retardés, décalés en fréquence, comprimés en temps et en fréquence,

- pour chaque case distance/doppler

    o d'un réglage de seuil pour une probabilité de fausse alarme donnée,

    o d'une comparaison au seuil de la fonction d'ambiguïtés.

La particularité principale de ce fonctionnement est le découplage entre l'analyse spatiale (le balayage d'un faisceau) et l'analyse distance/vitesse ou retard/Doppler. Ce découplage engendre la nécessité de mettre en ouvre systématiquement une analyse distance/vitesse pour chaque position du faisceau, qu'il y ait des émetteurs ou non dans le faisceau, des réflecteurs ou non dans le faisceau.

Par ailleurs, le pointage d'un faisceau suppose implicitement une propagation en espace libre (sans multitrajets) et requiert, pour le balayage électronique, une maîtrise du diagramme d'antenne (modèle des éléments rayonnants et du réseau, calibrage du réseau de capteurs, etc..).

D'autre part, pour une case donnée espace/distance/doppler, le réglage du seuil nécessite une estimation préalable du niveau de bruit à partir de l'observation des cases espace/distance/doppler sans réflecteurs, ce qui peut s'avérer délicat à mettre en oeuvre et coûteux en calculs. En outre, en présence d'interférences, des techniques d'éjection d'interférences par filtrage spatial doivent être insérées en réception pour chaque position du faisceau balayé, lequel devient ainsi antibrouillage et robuste aux interférences. Toutefois, le faisceau balayé ayant une certaine largeur angulaire, inversement proportionnelle à l'ouverture de l'antenne ou du réseau (en nombre de longueurs d'onde), la réjection des interférences pour une case spatiale donnée peut s'accompagner de la réjection des échos réflecteurs présents dans cette même case. Pour cette raison, des techniques de robustification empêchant la réjection des réflecteurs à mesurer doivent être intégrées dans les traitements au prix d'une perte potentielle de performances sur la réjection des interférences et d'une complexification dans la mise en oeuvre.

Le problème de la mesure de propagation ou de la détection électromagnétique ou acoustique consiste à détecter la présence du signal émis $s(kT_e)$ sur une certaine durée $0 \leq k \leq K\text{-}1$, et à estimer le vecteur canal $\boldsymbol{h}_S$ (relatif à une réception multi-capteurs et correspondant au vecteur directeur de la position du réflecteur ou de l'émetteur pour une propagation en espace libre), le retard $l_oT_e$ (supposé pour simplifier que c'est un multiple de la période d'échantillonnage mais ce n'est pas obligatoire ni limitatif) et le décalage Doppler $\Delta f_o = m_o/KT_e$ (la résolution en fréquence étant $1/KT_e$, on suppose pour simplifier que le décalage Doppler est un multiple de cette résolution ), à partir de la connaissance du signal émis et de l'observation de versions décalées et translatées en fréquence des vecteurs $x(kT_e)$ des signaux reçus sur le capteur.

Dans le cas d'une application de mesure de propagation ou de détection classique en électromagnétisme ou en acoustique, les récepteurs conventionnels supposent une propagation en espace libre, c'est-à-dire $h_S \triangleq e^{j\phi s}s$ et scrutent l'espace, direction par direction ou vecteur s par vecteur $s$, avec une résolution correspondant à la largeur de lobe (généralement la largeur de lobe « à 3 dB ») du faisceau formé par le réseau utilisé, où $h_s$ est le vecteur des réponses impulsionnelles des canaux associés à la direction du réflecteur, et $\phi_s$ et $s$ correspondent respectivement à la phase et au vecteur directeur de l'émetteur ou du réflecteur. Ceci définit la notion de case spatiale précitée, couramment employée par les hommes de l'art. Par ailleurs, l'estimation du retard $l_oT_e$ s'effectue avec une résolution égale à $1/B_e$, laquelle est nominalement fonction (généralement proportionnelle) de l'inverse de la bande équivalente, $B_e$, du signal émis, lequel inverse définit également la résolution en distance. Ceci définit la notion de case distance précitée et couramment employée par les hommes de l'art. Enfin, la résolution de l'estimation du décalage Doppler est fonction (généralement proportionnelle) de l'inverse de la durée d'observation élémentaire c'est-à-dire de l'inverse de la durée $KT_e$ du signal émis. Ceci définit la notion de case Doppler précitée couramment employée par les hommes de l'art.

L'art antérieur décrit différentes structures de réception. En général, la structure de réception d'un détecteur optimal dépend des informations disponibles a priori sur les canaux de propagation des signaux émanant des émetteurs et réflecteurs à détecter et sur le bruit global, lequel comprend le bruit thermique des récepteurs et les interférences potentielles [1]. Les récepteurs conventionnels utilisés en détection électromagnétique [2] ou acoustique [4], lesquels scrutent l'espace par balayage électronique ou mécanique d'un faisceau et mettent en oeuvre une analyse spatiale en amont et découplée de l'analyse Distance/Doppler, supposent, en général, implicitement ou explicitement, pour chaque position du faisceau et chaque case Distance/Doppler scrutée :

- une propagation en espace libre,

- la direction scrutée connue,

- le bruit global gaussien, circulaire et inconnu,

- les signaux émanant d'émetteurs ou de réflecteurs faibles par rapport au bruit de fond,

- la phase inconnue des signaux émanant des émetteurs ou des réflecteurs.

Ces récepteurs ne s'avèrent optimaux que sous ces hypothèses.

L'enseignement technique du brevet EP 1 500 951 concerne un procédé pour détecter et localiser des engins mobiles en exploitant le rayonnement produit par des émetteurs présents dans l'environnement pour d'autres applications.

L'objet de l'invention est de substituer aux structures conventionnelles précédentes une structure de réception permettant de pallier au moins les inconvénients des systèmes précités. Elle consiste notamment à effectuer un couplage de l'analyse spatiale, et de l'analyse retard-distance/Doppler-cinématique dans un processus conjoint. Elle met en oeuvre un traitement couplé/conjoint des variables espace retard-Distance. Le procédé selon l'invention permet notamment de déterminer les paramètres de la réponse impulsionnelle. Ces paramètres sont par exemple des paramètres relatifs à la structure spatiale, temporelle et fréquentielle du champ radio électrique (distributions d'angles d'arrivée, diffusion angulaire, temporelle et Doppler, etc.) Ces paramètres peuvent aussi être des caractéristiques de diffusion par des obstacles au sol, dans l'espace,... ou encore des paramètres cinématiques des diffuseurs.

L'invention concerne un procédé pour détecter et/ou localiser des émetteurs et réflecteurs fixes ou mobiles, dans un système comportant N capteurs recevant des signaux émanant desdits émetteurs ou réflecteurs fixes ou mobiles, avec $N$ supérieur ou égal à 2 et comportant au moins les étapes suivantes :

o utiliser le couplage de l'analyse spatiale et de l'analyse retard-distance/Doppler-cinématique afin de déterminer une fonction d'ambiguïté,

déterminer au moins une statistique suffisante $\hat{C}(l, m, K)$ correspondant à la corrélation entre le signal connu $s(kTe)$ correspondant à l'enveloppe complexe du signal émis, échantillonné à la période $Te$, considéré sur une durée d'intégration $de K$ échantillons (indice $k=0,...,K-1$), auquel on fait subir une éventuelle transformation liée aux hypothèses sur les positions et cinématiques des émetteurs récepteurs et réflecteurs et sur les fluctuations de la propagation, et la sortie d'un filtre spatial $w(l,m)$, où $l$ symbolise un ensemble d'hypothèses temporelles et où $m$ symbolise un ensemble d'hypothèses fréquentielles, qui prend en entrée les observations $x_m((k+l)T_e)$, $0 \le k \le K - 1$, elles aussi échantillonnées à la période $Te$, déterminer les valeurs du couple $(l, m)$ en comparant la valeur de la statistique $\hat{C}(l, m, K)$ pour le couple

*(l, m)* à une valeur seuil de détection, et caractérisé en ce que, pour les cas où les paramètres temporels symbolisés par *l* se réduisent à un retard ou à une distance, et où les paramètres cinématiques symbolisés par *m* se réduisent à un Doppler ou à une vitesse relative le procédé comporte au moins les étapes suivantes :

pour chaque hypothèse retard *l* et chaque hypothèse Doppler *m, m* en indice des variables $x_m$ et $r_{x_m s}$ , (la durée d'intégration étant au maximum *KTe,* la résolution et le pas d'échantillonnage en Doppler peuvent être pris à $1/KT_e$ , et le décalage Doppler estimé est alors un multiple de $1/KT_e$ caractérisé par l'indice m = 0,...,K-1)

- Estimer le vecteur $\hat{r}_{x_m s}(lT_e)$ à partir des K échantillons connus, $s(kT_e)$, du signal émis et des K observations décalées en fréquences, $x_m((k+l)T_e) = x((k+l)T_e) \exp[-j2\pi m(k+l)/K]$, $0 \le k \le K - 1$, par la statistique :

$$\hat{r}_{x_m s}(lT_e) \triangleq \frac{1}{K} \sum_{k=0}^{K-1} x_m((k+l)T_e)\, s(kT_e)^*$$

- Estimer la matrice $\hat{R}_{x_m}(lT_e)$ à partir des K observations décalées en fréquences, $x_m((k+l)T_e\} = x((k+l)T_e) \exp[-j2\pi m(k+l)/K]$, $0 \le k \le K-1$, par la statistique :

$$\hat{R}_{x_m}(lT_e) \triangleq \frac{1}{K} \sum_{k=0}^{K-1} x_m((k+l)T_e)\, x_m((k+l)T_e)^{\dagger}$$

- Calculer la statistique suffisante

$$\hat{C}(l, m, K) \triangleq (1/\hat{\pi}_s)\, \hat{r}_{x_m s}(lT_e)^{\dagger}\, \hat{R}_{x_m}(lT_e)^{-1}\, \hat{r}_{x_m s}(lT_e) \text{ où } \hat{\pi}_s \text{ est}$$

définie par l'estimée au sens des moindres carrés de la puissance moyenne du signal connu, par

$$\hat{\pi}_s = [\frac{1}{K} \sum_{k=0}^{K-1} |s(kT_e)|^2$$

ledit procédé étant caractérisé en ce qu'il comporte au moins les étapes suivantes :

• Calculer la statistique suffisante

$$\hat{F}(l, m, s, K) = (1/\hat{\pi}_s)\, \frac{|s^{\dagger}\, \hat{R}_{x_m}(lT_e)^{-1}\, \hat{r}_{x_m s}(lT_e)|^2}{(s^{\dagger}\, \hat{R}_{x_m}(lT_e)^{-1}\, s)\, (1 - \hat{C}(l, m, K))}$$

où S est le vecteur directeur du signal émanant de l'émetteur ou du réflecteur.

- Régler le seuil de détection pour une probabilité de fausse alarme donnée,

- Comparer la valeur de la statistique $\hat{F}(l, m, s, K)$ au seuil de détection fixé et dans le cas où il y a dépassement de cette valeur seuil, décréter la détection du réflecteur dans la case distance/doppler *(l, m)* et la case spatiale s,

- Estimer le retard et la distance relatifs de l'émetteur ou du réflecteur à partir de *l*

- Estimer le Doppler et la vitesse relatifs de l'émetteur ou du réflecteur à partir de *m*

- Estimer la position angulaire de l'émetteur ou du réflecteur à partir de s,

Le paramètre Doppler/cinématique cite m en indice des variables. Notons que l'écriture ci dessus de la statistique $\hat{C}(l, m, K)$, du signal s(kTe) et celle du filtre w(l,m) sont interprétées dans un sens formel : en toute généralité, chacun des paramètres l, k et m peuvent représenter plusieurs variables liées à la position et à la cinématique de l'émetteur, du réflecteur, voire du capteur s'il est lui-même mobile. Cependant, pour un signal en bande étroite et une durée d'intégration cohérente du processus suffisamment petite pour garantir une variation de la position et de cinématique de l'émetteur du réflecteur et du capteur réduite, on retombe sur les cas simplifiés décrits plus haut : l'hypothèse temporelle 1 se réduit à une hypothèse sur une valeur de retard, et l'hypothèse fréquentielle m se réduit à une hypothèse sur une valeur de décalage Doppler, correspondant respectivement à des multiples (entiers ou non) des résolutions explicitées plus haut. Pour garantir l'efficacité du procédé dans les cas plus complexes, par exemple lorsque la cinématique du capteur, de l'émetteur ou du réflecteur induit des instationnarités des paramètres retard ou Doppler durant la durée d'intégration cohérente des signaux dans la mise en oeuvre (instationnarités liées par exemple à une vitesse rapide), la définition de 1 prend non seulement en compte le retard du signal émanant du réflecteur, mais aussi des paramètres à l'ordre 1 tels que la rampe temporelle relative du signal émanant du réflecteur (ou dérivée du retard sur la durée d'intégration, elle-même dépendante de l'enveloppe temporelle du signal et du paramétrage du traitement objet de l'invention), non seulement le décalage Doppler m du signal émanant du réflecteur, mais aussi des paramètres à l'ordre 1 tels que la rampe Doppler du signal émanant du réflecteur (ou dérivée du décalage Doppler sur la durée d'intégration, elle-même limitée par l'enveloppe spectrale du signal et le paramétrage du traitement objet de l'invention). Dans les cas encore plus complexes, il est possible de recourir à des paramètres relatifs angulaires, temporels et Doppler à l'ordre 2, et à toute autre type de variable modélisant la cinématique de l'émetteur, du réflecteur, du capteur.

Dans les cas plus complexes, le procédé comporte, par exemple, les étapes suivantes :

2A) on introduit dans la définition des paramètres temporels, tels que retards-positions symbolisés par 1, dans la définition des paramètres fréquentiels, tels que Doppler-cinématique, symbolisés par m, et dans celle du signal connu s à chaque hypothèse 1 et m, les variables et les transformations du signal induites par les mouvements de l'émetteur du récepteur ou du réflecteur, ainsi que par les fluctuations du canal de propagation, dépendant de l'hypothèse retard-position, de l'hypothèse Doppler-vitesse relative, de la durée d'intégration du traitement, de la bande équivalente du signal, de la durée équivalente du signal et de sa périodicité lorsqu'il est impulsif pendant la durée d'intégration du traitement, de la fluctuation du retard sur cette durée, de la fluctuation du Doppler sur cette durée,

2B) on utilise le signal $s_{l,m}$ obtenu à partir de la transformation de s en fonction des hypothèses temporelles symbolisées par l et des hypothèses fréquentielles symbolisées par m.

Pour la détection d'un émetteur ou d'un réflecteur dont le signal subit des interférences élevées, on utilise un signal $x'_m((k+l)T_e)$ et une réplique s' en lieu et place du signal d'entrée $x_m((k+l)T_e$ et de la réplique originale s, le signal $x'_m(k+l)T_e)$) étant obtenu à partir de du signal $x_m((k+l)T_e)$ et la réplique s' étant obtenue à partir de la réplique originelle s ou de la réplique transformée $s_{l,m}$ au moyen d'opérations faisant intervenir des filtres spatio-temporels améliorateurs tels que les suivants :

5A) pour chaque émetteur interférant :

estimation de la réponse impulsionnelle $g_{int}$ du filtre de propagation de l'émetteur inteférent au récepteur d'après une estimation $S_{int}''$ de son signal émis $s_{int}$ par la minimisation du critère

$$\hat{\varepsilon}_{int}(l_0,L) \triangleq \frac{1}{L} \cdot \sum_{0}^{L-1} \quad |x((l_0+l)T_e) - g_{int}{}^\dagger S_{int,,m,;i}{}''|^2$$

en considérant la réplique $S_{int}''=(s_{int}''((l_0+l)T_e),s_{int}''((l_0+l+1)T_e),...,s_{int}''((l_0+l+L-l)T_e))^T$ obtenue soit par connaissance a priori totale du signal interférent originel (dans ce cas $s_{int}''=s_{int})$, soit par connaissance a priori partielle du signal interférent originel (dans ce cas $s_{int}''=s_{int}$ sur un nombre $K''$ d'échantillons à la période *Te),* soit par démodulation/égalisation du signal interférent originel par tout moyen connu de l'homme de l'art (dans ce cas $s_{int}$» = $s_{int}$), ou en considérant la réplique transformée $S_{int,m,l}$»=($s_{intm,l}$»(($l_0$+$l$)Te), $s_{intm,l}$»(($l_0$+$l$+1)$T_e$),...,$s_{intm,l}$»($(l_0$+$l$+L-1)$T_e$))$^T$ compte tenu d'une hypothèse $l, m$ sur la position et la cinématique de l'émetteur interférant produisant $s_{int}$

5B) pour un ou plusieurs émetteurs interférents fixes ou de cinématique connue, et choisis en fonction de leur stabilité en fréquence et en temps,

on introduit sur la réplique $S_{int}$ différentes hypothèses en fréquence et on exploite des récurrences présentes dans la réplique afin d'estimer finement sur de grandes longueurs d'intégation $K$ les déviations en fréquence et en temps relativement à l'émetteur interférent, on estime des dérives relatives à l'émetteur interférent des oscillateurs locaux des mélangeurs et des horloges du système de réception et d'échantillonnage des signaux utilisés pour mettre en oeuvre l'invention.

On utilise, par exemple, un vecteur d'observation $\hat{x}_m((k+l)T_e) \triangleq [x_m((k+l)T_e)^T, x_m((k+l)Te)^\dagger]^T$ composé du vecteur d'observation et de son complexe conjugué et en ce que l'on met en oeuvre les étapes précitées à partir de $\overline{x}_m((k+l)T_e)$ en lieu et place de $x_m((k+l)T_e)$.

On dispose, par exemple, en plus d'une référence bruit total seul et on exécute les étapes précitées en utilisant une estimée de la matrice de bruit total seule étendue, $\hat{R}_{\tilde{b}\ Tm}(lT_e)$ obtenue via les échantillons de référence bruit seul, à la place d'une estimée de la matrice de corrélation des observations étendue, $\hat{R}_{\tilde{x}m}(lT_e)$, où $\tilde{b}_m((k+l)Te) \triangleq [b_m((k+l)T_e)^T, b_m((k+l)T_e)^\dagger]^T$.

Le vecteur directeur du réflecteur étant connu pour des signaux émis rectilignes et des interférences potentiellement non circulaires, le procédé est caractérisé en ce qu'il comporte au moins les étapes suivantes :

calculer la statistique suffisante

$$\hat{C}_{nc}(l, m, K) \quad \triangleq \quad (1/\hat{\pi}_s) \ \hat{r}_{\tilde{x}ms}(lT_e)^\dagger \ \hat{R}_{\tilde{x}m}(lT_e)^{-1} \ \hat{r}_{\tilde{x}ms}(lT_e)$$

construire une matrice

$$M \quad \triangleq \quad \begin{pmatrix} s & 0 \\ 0 & s^* \end{pmatrix} \quad (21)$$

construire une statistique

$$\hat{F}_{nc}(l, m, s, K) = (1/\hat{\pi}_s) \ (20)$$

$$\frac{\hat{r}_{\tilde{x}ms}(lT_e)^\dagger \ \hat{R}_{\tilde{x}m}(lT_e)^{-1} \ M \ [M^\dagger \ \hat{R}_{\tilde{x}m}(lT_e)^{-1} M]^{-1} \ M^\dagger \ \hat{R}_{\tilde{x}m}(lT_e)^{-1} \ \hat{r}_{\tilde{x}ms}(lT_e)}{1 - \hat{C}_{nc}(l, m, K)}$$

régler le seuil de détection pour une probabilité de fausse alarme donnée,
Comparer la valeur de la statistique $\hat{F}_{nc}(l, m, s, K)$ au seuil et détecter l'émetteur ou le réflecteur dans la case distance/doppler $(l, m)$ et la case spatiale s si il y a dépassement,
Estimer le retard et la distance relatifs de l'émetteur ou du réflecteur à partir de l,
Estimer le Doppler et la vitesse/cinématique relatifs de l'émetteur ou du réflecteur à partir de m,
Estimer la position angulaire de l'émetteur ou du réflecteur à partir de s .L'invention concerne aussi un dispositif comprenant un moyen, tel qu'un processeur adapté à exécuter les étapes du procédé selon l'invention.

Le couplage espace/retard-distance/Doppler-cinématique objet de l'invention permet notamment d'accéder directement aux positions des émetteurs et des réflecteurs sans avoir à balayer tout l'espace et donc sans avoir à scruter les directions dépourvues d'émetteur et de réflecteurs. Il permet de relâcher les contraintes sur la maîtrise du diagramme du réseau de capteurs (par exemple, en cas de couplage entre éléments rayonnants, la calibration n'est plus nécessaire) et s'accommode parfaitement d'une propagation avec trajets multiples. Enfin, ce couplage judicieux permet, non seulement, un réglage de seuil indépendant du niveau de bruit présent en entrée mais également une protection intrinsèque vis-à-vis des interférences sans risquer de rejeter les signaux utiles à la mesure et sans avoir à insérer de traitements de robustification.

D'autres avantages et caractéristiques de l'invention apparaîtront mieux à la lecture de la description qui suit d'un exemple de réalisation simplifié, donné à titre illustratif et nullement limitatif annexé des figures qui représentent :

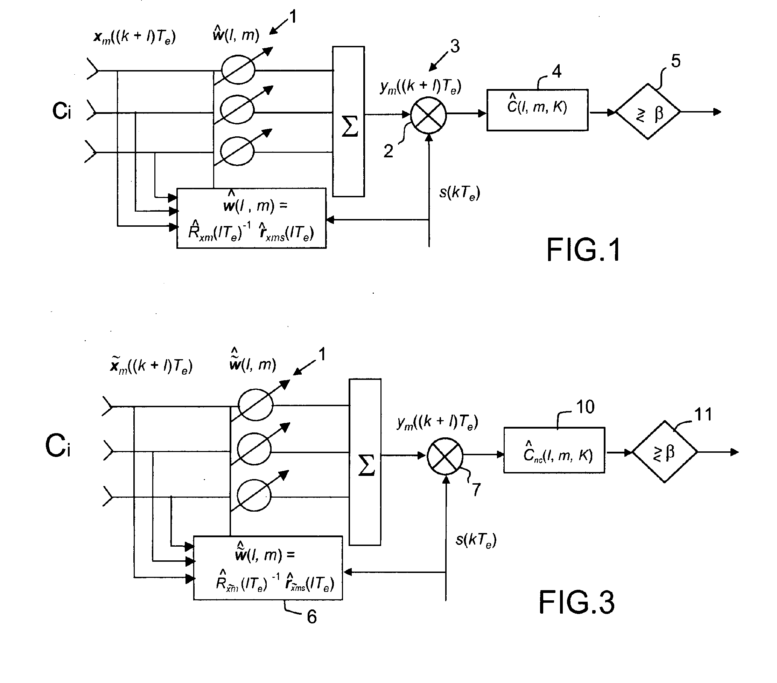

  o La figure 1, un schéma fonctionnel de la fonction d'ambiguïtés espace/retard-distance/Doppler-cinématique selon l'invention, les paramètres Doppler-cinématiques étant réduits dans ce cas simplifié non limitatif au paramètre Doppler directement lié à la vitesse relative de l'émetteur ou du réflecteur,

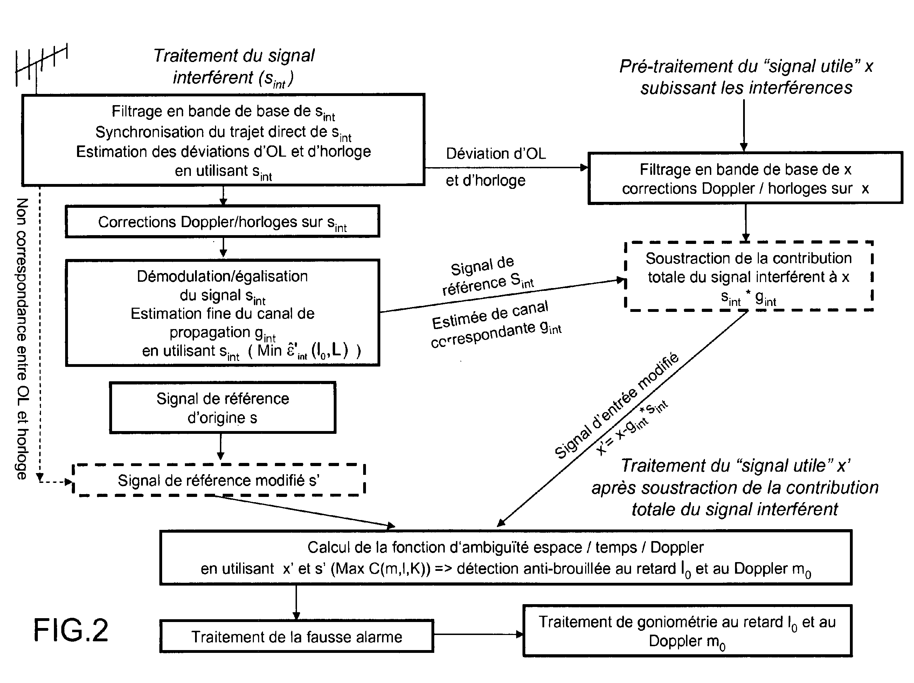

  o La figure 2 un exemple de mise en oeuvre du procédé en prenant en compte les interférences,

  o La figure 3 un schéma fonctionnel de l'extension non circulaire de la fonction d'ambiguïtés espace/retard-distance/ Doppler-cinématique, les paramètres Doppler-cinématiques étant réduits dans ce cas simplifié non limitatif au paramètre Doppler directement lié à la vitesse relative de l'émetteur ou du réflecteur, et

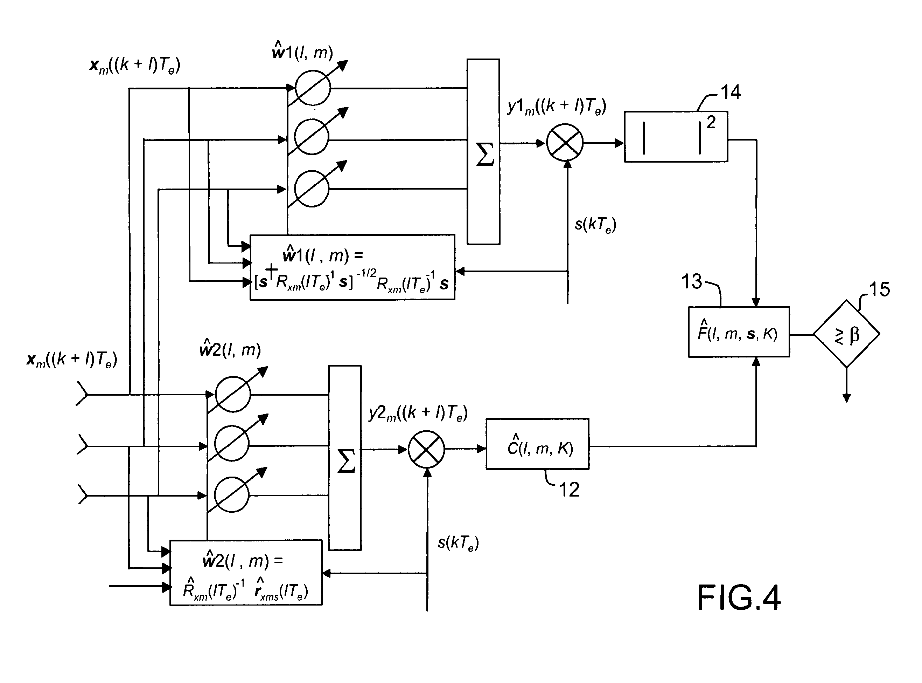

  ○ La figure 4 un schéma fonctionnel de la fonction d'ambiguïtés espace/retard-distance/Doppler-cinématique lorsque **s** est connu, les paramètres Doppler/cinématiques étant réduits dans ce cas simplifié non limitatif au paramètre Doppler directement lié à la vitesse relative de l'émetteur ou du réflecteur.

On considère une antenne à $N$ capteurs numériques Ci à bande étroite (BE) recevant la contribution d'un émetteur ou d'un réflecteur d'un signal continu, impulsionnel ou impulsionnel répété originaire d'un système d'émission électromagnétique ou acoustique d'opportunité connu (exemples non limitatifs : un émetteur de communications préalablement démodulé, ou dont certaines parties du signal sont connues a priori - mots et codes de synchronisations -, la partie émettrice d'un sondeur de canal, etc.), auquel s'ajoute un bruit total composé d'interférences et de bruit de fond. Sous ces hypothèses, le vecteur, $x(kT_e)$, des enveloppes complexes des signaux échantillonnés et observés en sortie des capteurs Ci est supposé donné par

$$x(kT_e) \;\approx\; s((k - l_O)T_e)\exp[\mathrm{j}2\pi m_O(k - l_O)/K]\,\boldsymbol{h}_S \;+\; \boldsymbol{b}_T(kT_e) \qquad (1)$$

où $T_e$ est la période d'échantillonnage du capteur numérique, $s(t)$ est l'enveloppe complexe du signal émis, connu du récepteur et de durée $KT_e$, $b_T(kT_e)$ est le vecteur bruit total échantillonné, non corrélé au signal émanant du réflecteur, $\boldsymbol{h}_S$ est le vecteur des réponses impulsionnelles des canaux associés au signal émanant du réflecteur, $l_O T_e$ est le retard de propagation du signal émanant du réflecteur contenant en particulier les informations sur la distance entre le réflecteur, le système d'émission exploité et le capteur, retard supposé égal à un multiple de $T_e$ pour simplifier, hypothèse donnée à titre non limitatif, $\Delta f_O = m_O/KT_e$ est le décalage Doppler induit par le réflecteur (potentiellement mobile), supposé être égal à un multiple de l'inverse de la durée d'intégration du traitement $KT_e$ pour simplifier, hypothèse donnée à titre non limitatif, lequel contient l'information sur la vitesse relative du réflecteur par rapport aux positions du système d'émission et du capteur utilisés. En toute rigueur, le modèle (1) suppose des canaux de propagation sans étalement temporel, ce qui se produit, par exemple, pour une propagation en espace libre (télécommunications par satellite, radiocommunications aéroportées....) ou des canaux à évanouissements du signal pour lequel la bande de cohérence du canal est plus grande que la largeur de bande du signal plus connu sous le terme anglo-saxon « fading plat », qui concerne certaines situations de radiocommunications ou de détection en zone urbaine. En particulier, pour une propagation en espace libre, $\boldsymbol{h}_S \triangleq \mathrm{e}^{\mathrm{j}\phi s}\,\boldsymbol{s}$, où $\phi_s$ et $\boldsymbol{s}$ correspondent respectivement à la phase et au vecteur directeur du signal émanant de l'émetteur ou du réflecteur. Le modèle (1) suppose aussi que les paramètres temporels et fréquentiels de l'émetteur ou du réflecteur sont réduits à un retard et à un décalage Doppler, cette description n'étant complète en toute rigueur que pour des émetteurs ou réflecteurs de cinématique particulière (mouvement rectiligne uniforme et de vitesse limitée relativement à la durée d'intégration cohérente du processus).

Toutefois, le procédé s'applique aussi à des canaux étalés temporellement. Dans ces conditions, la partie utile de (1) correspond en fait à la contribution d'un trajet ou mode de propagation du signal émanant de l'émetteur ou du réflecteur, les autres trajets étant intégrés dans le vecteur bruit total.

De plus, comme il a été souligné précédemment, le procédé s'applique aussi à des émetteurs, réflecteurs ou capteurs présentant une cinématique plus complexe qu'un mouvement rectiligne uniforme et de vitesse limitée relativement à la durée d'intégration du processus. Dans ces conditions, la partie utile de (1) correspond en fait à la contribution d'un signal qui subit la déformation induite par cette cinématique, et l'on doit considérer une observation du signal utile complétée par des paramètres à l'ordre 1 tels qu'évoqués précédemment, par exemple une rampe temporelle et une rampe Doppler, pour rendre compte de vitesses relatives importantes ou de mouvements à accélération limitée de l'émetteur, du réflecteur ou du capteur durant la phase d'intégration cohérente du processus objet de l'invention, voire des paramètres à l'ordre 2 pour rendre compte de phases d'accélération/décélération importantes de l'émetteur, du réflecteur ou du capteur durant l'intégration cohérente du processus objet de l'invention ; et modéliser enfin les déformations du signal s induites par l'hypothèse temporelle symbolisée par 1 et induite par l'hypothèse fréquentielle symbolisée par m avant d'appliquer le procédé au signal $s_{l,m}$ ainsi obtenu par transformation de s. Notons que la liste des paramètres précités n'est pas limitative, d'autres paramètres peuvent être introduits pour modéliser l'impact de la cinématique du système d'émission, du capteur ou du réflecteur sur le signal émanant de ce dernier.

**Statistiques du second ordre des observations**

Les statistiques du second ordre considérées dans la suite de la description correspondent à la première matrice de corrélation du vecteur des enveloppes complexes des signaux échantillonnés et observés en sortie des capteurs, $x(kT_e)$, définie, sous les hypothèses précédentes, par

$$R_x(kT_e) \overset{\Delta}{=} \mathrm{E}[\boldsymbol{x}(kT_e)\,\boldsymbol{x}(kT_e)^{\dagger}] \approx \pi_S((k-l_O)T_e)\,\boldsymbol{h}_S\,\boldsymbol{h}_S^{\dagger} + R(kT_e) \qquad (2)$$

laquelle dépend du temps en général du fait de la non stationnarité potentielle du signal émis (modulations numériques pour les signaux de communication par exemple.....). Dans les expressions précédentes, $\dagger$ signifie transposé conjugué, $R(kTe) \overset{\Delta}{=} E[b_T(kT_e)\,b_T(kT_e)^{\dagger}]$ est la première matrice de corrélation du vecteur $b_T(kT_e)$, $\pi_s(kT_e) \overset{\Delta}{=} E[|s(kT_e)|^2]$ est la puissance instantanée du signal émanant de l'émetteur ou du réflecteur qui serait reçu par un capteur omnidirectionnel pour une propagation en espace libre.

Les différents modes de réalisation décrits ci-après sont mis en oeuvre, par exemple dans un récepteur comportant plusieurs antennes de réception $C_l,...,C_N$ ainsi qu'un processeur P programmé pour exécuter les différentes étapes. Les différents exemples de réalisation sont donnés en relation aux figures 1, 2, 3 et 4.

Le procédé selon l'invention repose notamment sur la détermination d'une fonction d'ambiguïté en utilisant un couplage de l'analyse spatiale et de l'analyse retard-distance/Doppler cinématique dans un processus conjoint.

**Différents exemples de réalisation de l'invention**

Une première variante de réalisation du procédé selon l'invention, illustrée à la figure 1, consiste à trouver l'hypothèse temporelle/retard-distance $l = \hat{l}_o$ et l'hypothèse fréquentielle /Doppler-cinématique $m = \hat{m}_o$ tels que les échantillons connus $s(kT_e)$, $0 \leq k \leq K - 1$, soient optimalement détectés à partir des vecteurs observations $x_m((k+l)T_e) = x((k+l)T_e)\,exp[-j2\pi m(k+l)/K]$, $0 \leq k \leq K - 1$, en supposant $R(k)$ et $\boldsymbol{h}_s$ inconnus et en ne faisant aucune hypothèse sur les canaux de propagation et le niveau du signal émanant de l'émetteur ou du réflecteur.

Une façon de procéder consiste à trouver $l = \hat{l}_o$ et $m = m_o$ tels que les échantillons connus $s(kT_e)$, $0 \leq k \leq K - 1$, soient optimalement estimés, au sens des moindres carrés, à partir d'une opération de filtrage linéaire des observations $x_m((k+l)T_e)$, $0 \leq k \leq K - 1$. En d'autres termes, le procédé cherche à trouver $l = \hat{l}_o$ et $m = \hat{m}_o$ minimisant le critère des moindres carrés

$$\hat{\varepsilon}(l, m, K) \overset{\Delta}{=} \frac{1}{K} \sum_{k=0}^{K-1} \left| s(kT_e) - \hat{\boldsymbol{w}}(l, m)^{\dagger} \boldsymbol{x}_m((k+l)T_e) \right|^2 \qquad (3)$$

où w(l, m) référence 1 sur la figure 1 est le filtre spatial qui minimise le critère (3) et qui est défini par

$$\hat{w}(l, m) \quad \triangleq \quad \hat{R}_{x_m}(lT_e)^{-1}\, \hat{r}_{x_m s}(lT_e) \tag{4}$$

où le vecteur $\hat{r}_{x_m s}(lT_e)$ et la matrice $\hat{R}_{x_m}(lTe)$ sont données par

$$\hat{r}_{x_m s}(lT_e) \quad \triangleq \quad \frac{1}{K} \sum_{k=0}^{K-1} x_m((k+l)T_e)\, s(kT_e)^* \tag{5}$$

$$\hat{R}_{x_m}(lT_e) \quad \triangleq \quad \frac{1}{K} \sum_{k=0}^{K-1} x_m((k+l)T_e)\, x_m((k+l)T_e)^{\dagger} \tag{6}$$

Introduisant (4) (5) et (6) dans (3), une nouvelle expression du critère des moindres carrés $\hat{\varepsilon}(l, m, K)$ est donnée par :

$$\hat{\varepsilon}(l, m, K) = \hat{\pi}_s\, [\, 1 - \hat{C}(l, m, K)\, ] \tag{7}$$

où $\hat{C}(l, m, K)$, référencé 4 sur la figure 1, tel que $0 \le \hat{C}(l, m, K) \le 1$, est donné par :

$$\hat{C}(l, m, K) \quad \triangleq \quad (1/\hat{\pi}_s)\, \hat{r}_{x_m s}(lT_e)^{\dagger}\, \hat{R}_{x_m}(lT_e)^{-1}\, \hat{r}_{x_m s}(lT_e) \tag{8}$$

et $\hat{\pi}_s$ est défini par :

$$\hat{\pi}_s = [\, \frac{1}{K} \sum_{k=0}^{K-1} |s(kT_e)|^2 \,] \tag{9}$$

On déduit de (7) que $\hat{l}_o$ et $\hat{m}_o$ sont respectivement les paramètres $l$ et $m$ qui maximisent la statistique suffisante $\hat{C}(l, m, K)$ donnée par (8).

En pratique une valeur $\beta$, 5 figure 1, est fixée pour le seuil de détection de manière à ce que la probabilité que la statistique (8) dépasse ce seuil en absence de signal émanant de l'émetteur ou du réflecteur soit égale à une certaine valeur appelée probabilité de fausse alarme (PFA). Dès lors, un émetteur ou un réflecteur est détectée pour la case distance $l$ et la case Doppler $m$ si la statistique (8) dépasse le seuil $\beta$ pour le couple $(l, m)$.

Ce récepteur ne requiert aucune hypothèse sur les canaux de propagation, les interférences ou le signal émis, dès lors que ce dernier est partiellement ou totalement connu (à l'issue d'une démodulation préalable par exemple). Ce récepteur ne requiert aucun balayage de l'espace. En outre, il est indépendant de la puissance du vecteur observation, ce qui signifie que le seuil de détection est indépendant du niveau de bruit présent en entrée dans la mesure où dès que K est supérieur à quelques unités ou dizaines d'unités, la loi de probabilité de la statistique $\hat{C}(l, m, K)$ suit approximativement une loi de Gauss et n'est plus impactée par la loi des interférences quels que soient les niveaux de celles-ci.

**Conditions d'optimalité en termes de rapport de vraisemblance**

En se plaçant à l'instant de détection optimal $l_oT_e$ et au décalage Doppler optimal $\Delta f_o = m_o/KT_e$ et en considérant la situation à deux hypothèses H0 : présence de bruit total seulement dans $x_{mo}((k+l_o)T_e)$, et H1 : présence de bruit total et du signal utile dans $x_{mo}((k+l_o)T_e)$, ce qui peut se formaliser de la manière suivante

$$\text{H1}: \quad \boldsymbol{x}_{mo}((k+l_o)T_e) \quad \approx \quad s(kT_e)\,\boldsymbol{h}_s \;\dot{+}\; \boldsymbol{b}_{Tmo}((k+l_o)T_e) \qquad (10a)$$

$$\text{H0}: \quad \boldsymbol{x}_{mo}((k+l_o)T_e) \quad \approx \quad \boldsymbol{b}_{Tmo}((k+l_o)T_e) \qquad (10b)$$

où $\boldsymbol{b}_{Tmo}((k+l_o)T_e) = \boldsymbol{b}_T((k+l_o)T_e)\exp[-j2\pi m_o(k+l_o)/K]$,
dans ce contexte, d'après la théorie statistique de la détection (au sens de Neyman Pearson) [1], la stratégie optimale de détection du signal émanant de l'émetteur ou du réflecteur $s(kT_e)$ à partir des observations $x_{mo}((k+l_o)T_e)$ sur la durée du signal émis, consiste à comparer à un seuil le rapport de vraisemblance (RV), $L(x)(l_o, m_o)$, défini par

$$L(\boldsymbol{x})(l_O, m_O) \quad \overset{\Delta}{\approx} \quad \frac{p[\boldsymbol{x}_{mo}((k+l_O)T_e), 0 \le k \le K-1, / \text{H1}]}{p[\boldsymbol{x}_{mo}((k+l_O)T_e), 0 \le k \le K-1, / \text{H0}]} \qquad (11)$$

où $p[x_{mo}((k+l_o)T_e), 0 \le k \le K - 1 / \text{H}i]$ ( $i = 0, 1$) est la densité de probabilité conditionnelle du vecteur $[x_{mo}(l_oT_e)^T, x_{mo}((1+l_o)T_e)^T, ..., x_{mo}((K+l_o-1)T_e)^T]^T$ sous l'hypothèse H$i$. Il est alors possible de montrer que le récepteur caractérisé par (8) est une statistique suffisante pour le problème de détection optimal du signal émanant de l'émetteur ou du réflecteur au sens du rapport de vraisemblance généralisé si les conditions suivantes sont vérifiées :

A1 : les échantillons $\boldsymbol{b}_{Tmo}((k+l_o)T_e)$, $0 \le k \le K - 1$, sont non corrélés les uns aux autres,
A2 : la matrice $R((k+l_o)T_e)$ ne dépend pas de $k$,
A3 : la matrice $R((k+l_o)T_e)$ est inconnue,
A4 : le vecteur $\boldsymbol{h}_s$ est inconnu,
A5 : les vecteurs $\boldsymbol{b}_{Tmo}((k+l_o)T_e)$, $0 \le k \le K - 1$, sont Gaussiens,
A6 : les vecteurs $\boldsymbol{b}_{Tmo}((k+l_o)T_e)$, $0 \le k \le K - 1$, sont circulaires au second ordre,

La statistique (8) peut également s'écrire sous la forme, référencé 4:

$$\hat{C}(l, m, K) \;=\; (1/K\hat{\pi}_s) \sum_{k=0}^{K-1} y_m((k+l)T_e)\, s(kT_e)^{*} \qquad (12)$$

où $y_m((k+l)T_e) \overset{\Delta}{=} \hat{w}(l, m)^{\dagger}x_m((k+l)T_e)$ est la sortie du filtre $\hat{w}(l, m)$ pour le vecteur observation $x_m((k+l)T_e)$. Ainsi, on déduit de (12) que la statistique suffisante $\hat{C}(l, m, K)$, 4, correspond, à un facteur de normalisation près, au résultat de la corrélation 3 entre le signal connu $s(kT_e)$. et la sortie, $y_m((k+l)T_e)$, du filtre $\hat{w}(l, m)$ comme cela est illustré à la figure 3.
Le filtre $\hat{w}(l, m)$ est l'estimée au sens des moindres carrés, sur $K$ vecteurs observations, du filtre $w(l, m) \overset{\Delta}{=} R_x^{-1} r_{x_m s}(lT_e)$, obtenu lorsque $K \to \infty$, lequel minimise la moyenne temporelle, sur un horizon d'observation infini, de l'erreur quadratique moyenne entre $s(kT_e)$ et la sortie $w^{\dagger}x_m((k+l)T_e)$, où
$R_x \overset{\Delta}{=} <E[x_m((k+l)T_e)\,\boldsymbol{x}_m((k+l)T_e)^{\dagger}]>$, $\boldsymbol{r}_{x_m s}(lT_e) \overset{\Delta}{=} <E[x_m((k+l)T_e)\,s(kT_e)^{*}] >$ et où <.> est l'opération de moyennage temporel, en k, sur un horizon d'observation infini. Tant que $l$ et $m$ restent éloignés respectivement de $l_o$ et $m_o$, le filtre $w(l, m)$ reste proche de zéro, ce qui génère des valeurs de statistique $\hat{C}(l, m, K)$ également proches de zéro, au bruit d'estimation près dû à la durée finie du signal émis. Lorsque *l* et *m* s'approchent respectivement de $l_o$ et $m_o$, C(l, m, K) $\triangleq \lim\limits_{K \to \infty} \hat{C}$(l, m, K) augmente et atteint son maximum pour $l = l_o$ et $m = m_o$. Dans ce cas, la partie utile du vecteur observation $x_{mo}((k+l_o)T_e)$ et le signal émis $s(kT_e)$ sont en phase, le filtre $w(l_o, m_o)$ correspond, sous l'hypothèse d'une indépendance statistique entre le bruit total et le signal émis, au filtre adapté spatial (FAS) suivant :

$$w(l_o, m_o) \overset{\Delta}{=} R_x^{-1}\, r_{x_{mo}s}(l_o T_e) = [\pi_S / (1 + \pi_S\, h_S^\dagger R^{-1} h_S)]\ R^{-1}\, h_S \qquad (13)$$

i.e. au filtre spatial qui maximise le rapport signal sur bruit plus interférences en sortie (SINR ou Signal to Interference plus Noise Ratio (SINR)), où $\pi_s = \ <E[|s(kT_e)|^2]\ >$ et $R = \ <E[b_T(kT_e)\, b_T(kT_e)^\dagger]\ >$. Dès lors, $C(l_o, m_o, K)$ s'écrit :

$$C(l_o, m_o, K) = \frac{r_{x_{mo}s}(l_o T_e)^\dagger\, R_x^{-1}\, r_{x_{mo}s}(l_o T_e)}{\pi_S} = \frac{SINR_y}{1 + SINR_y} = w(l_o, m_o)^\dagger h_S \quad (14)$$

où $SINR_y$ est le SINR en sortie du FAS, $w(l_o, m_o)$, défini par :

$$SINR_y = \pi_S\, h_S^\dagger R^{-1}\, h_S \qquad (15)$$

La fonction C($l_o$, $m_o$, K) est une fonction croissante de $SINR_y$ approchant l'unité pour de fortes valeurs de rapport signal sur bruit plus interférences en sortie $SINR_y$. Tant que le nombre d'interférences reste inférieur au nombre de capteurs, le FAS (13) rejette les interférences tout en maximisant le Rapport Signal sur bruit (Signal to Noise ratio ou SNR en sortie). Dans ces conditions, l'opération de corrélation entre le signal émis et la sortie d'une estimée du FAS génère un maximum de corrélation à partir d'un nombre limité d'échantillons *K* dont la valeur minimale doit de ce fait augmenter lorsque le SINR en sortie décroît.

Ainsi, pour chaque case distance/doppler scrutée, le calcul du FAS associé permet de maximiser le SINR en sortie du trajet intercepté alors que pour un récepteur conventionnel, le filtre spatial est constant pour toutes les cases distance/doppler d'une même case spatiale.

## Remarques

L'hypothèse temporelle ou la case distance présentant une détection donne de l'information sur le retard/ distance relatif de l'émetteur au récepteur (et sur le retard/distance absolu si une information de synchronisation est disponible sur l'émetteur) ou sur la distance du réflecteur relativement à l'émetteur et au récepteur.

L'hypothèse fréquentielle ou la case Doppler présentant une détection donne de l'information sur la vitesse relative de l'émetteur par rapport au récepteur ou sur la vitesse du réflecteur relativement aux positions et cinématiques de l'émetteur et du récepteur.

La case spatiale associée à une détection est définie par $\hat{h}_s = \hat{R}_{xmo}((l_o T_e)\, \hat{w} = \hat{r}_{xms}(lT_e)$, il est possible d'envisager la détection et la caractérisation simultanée de tous les émetteurs et réflecteurs présents sans a priori sur leur position et sans balayage spatial.

Le traitement proposé n'est pas exclusif de l'utilisation d'antennes directives fixes ou tournantes que ce soit au niveau du système d'émission exploité ou au niveau du capteur et du procédé objet de l'invention, qui permettent une recherche secteur par secteur et offrent un gain d'antenne additionnel contre le bruit (amélioration de la sensibilité) et un filtrage spatial supplémentaire des interférences.

Le traitement proposé peut être envisagé y compris si le système d'émission émet différents signaux simultanément, y compris dans la même bande de fréquence (émissions « colorées » par exemple).

**Extensions spatio-temporelles du procédé pour améliorer les performances face aux interférences et aux trajets de propagation multiples, et face aux défauts des systèmes de réception.**

Lorsque les interférences sont présentes en grand nombre, par exemple lorsque le signal à traiter émane d'un réflecteur en présence de signaux provenant d'émetteurs multiples ou d'émetteurs associés à des trajets de propagation multiples ou lorsque les systèmes de réception utilisés présentent certains défauts d'instabilité ou de désensibilisation, il est possible d'augmenter le nombre de degrés de liberté dans le procédé et d'améliorer de ce fait sa capacité de séparation, sa capacité de discrimination des émetteurs et réflecteurs de faible vitesse, et sa sensibilité. Les étapes décrites ci-dessus exploitent un préfiltrage temporel du signal total reçu consistant, pour chaque émetteur interférant, à évaluer la contribution globale de l'émetteur interférent - résultant de la convolution du signal émis par la source interférente par le filtre de propagation qui lui est associé, ce signal et ce filtre étant préalablement estimés - puis à soustraire au signal incident la contribution globale résultant de l'émetteur interférent. Un exemple de réalisation simplifié est donné ci dessous, à titre illustratif et nullement limitatif, annexé de la figure 2 qui représente une mise en oeuvre du procédé général décrit précédemment, associée au préfiltrage spatio-temporel objet de la présente extension.

Les interférences fortes correspondent, par exemple, à des interférences de valeur supérieure de 10 à 40 dB au-dessus du récepteur à détecter.

Pour préfiltrer le signal, il faut estimer le signal $s_{int}(kT_e)$ émis par la source interférente et le canal de propagation signal $g_{int}(lTe)$ qui lui est associé. La figure 2 décrit différentes possibilités de construction de $s_{int}$.

Pour ce faire, différents procédés peuvent être mis en oeuvre selon le cas :

- lorsque le signal interférent originellement émis $s_{int}$ est totalement connu lorsque la source interférente est par exemple (non limitatif) un sondeur de canal, un émetteur de radiocommunication ou de radiodiffusion préalablement démodulé, un radar ou un sonar actif :

- le procédé évalue le filtre, induit par la propagation du signal de l'émetteur interférent au récepteur par toute méthode d'estimation connue de l'homme l'art, par exemple (non limitatif) en cherchant les coefficients $g_{int0}=g_{int}(l_0T_e)$, $g_{int1}=g_{int}((l_0+1).T_e)$,..., $g_{intL}=g_{int}((l_0+L).T_e)$ du filtre de propagation $g_{int}=(g_{int1}, g_{int2},...,g_{intL})$ minimisant à l'instant $l_0$ le critère des moindres carrés temporel $\hat{\varepsilon}_{int}'(l_0, L)$ ci dessous, évalué d'après le signal x pris sur une antenne convenablement choisie, et d'après la réplique $S_{int}=(s_{int}((l_o+l)T_e),s_{int}((l_0+l+1)T_e),..., s_{int}((l_0+l+L-1)T_e))^T$ prise sur L échantillons temporels.

$$\hat{\varepsilon}_{int}'(l_0, L) \overset{\Delta}{=} \frac{1}{L}.\sum_{0}^{L-1} \left| x((l_0+l)T_e) - g_{int}^{\dagger}S_{int} \right|^2 \qquad (16)$$

La réponse impulsionnelle $g_{int}$ du filtre ainsi restituée contient l'ensemble des trajets de propagation de l'émetteur au récepteur.

Lorsque le signal interférant originellement émis $s_{int}$ est partiellement connu, lorsque la source interférente est, par exemple, un émetteur de communication standardisé ou objet de spécifications techniques connues : on estime le filtre égaliseur du signal interférent reçu par des méthodes connues de l'homme de l'art; soit par synchronisation en temps et en fréquence sur des séquences connues à priori dans le signal s'il en existe, et application de toute méthode d'estimation de $g_{int}$ connue de l'homme de l'art, par exemple (non limitatif) la minimisation du critère précédent $\hat{\varepsilon}_{int}'(l_0, L)$, en se restreignant à la partie connue du signal $s_{int}$ originaire de l'émetteur ; soit par synchronisation en temps et en fréquence sur des séquences connues à priori dans le signal s'il en existe, puis démodulation/égalisation de l'ensemble du signal interférent $s_{int}$ et application de toute méthode d'estimation de $g_{int}$ connue de l'homme de l'art, par exemple (non limitatif) la minimisation du critère précédent $\hat{\varepsilon}_{int}'(l_0, L)$, en utilisant ou partie du signal interférent restitué $s_{int}$ ; soit enfin par des techniques aveugles de synchronisation symbole, récupération de porteuse/démodulation/égalisation portant sur le signal reçu x et utilisant l'a-priori disponible sur le signal originaire de la source interférente $s_{int}$, pour le restituer, puis appliquer toute méthode d'estimation de $g_{int}$ connue de l'homme de l'art, par exemple (non limitatif) la minimisation du critère précédent $\hat{\varepsilon}_{int}'(l_0, L)$, en utilisant tout ou partie du signal interférent restitué $s_{int}$.

Notons que l'une ou l'autre des étapes précédentes s'applique dans son principe soit au signal x reçu sur une antenne particulière convenablement choisie, dédiée par exemple à la démodulation du signal direct (c'est l'exemple non limitatif de la figure 2), soit au signal reçu sur un réseau antennaire, éventuellement le même que celui utilisé pour l'application du procédé au signal utile : dans ce cas, l'écriture précédente du critère $\hat{\varepsilon}_{int}'(l_0, L)$ à minimiser reste formellement identique en prenant en compte pour $x((l_0+l)T_e)$, $g_{int1}$ et $s_{int}((l_0+1)T_e)$ des vecteurs signaux de dimension Nx1, N étant le nombre d'antennes, et en considérant une norme vectorielle dans l'espace des vecteurs complexes à N dimensions. On obtient dans ce cas une estimation spatio-temporelle (et non plus seulement temporelle) de la réponse impulsionnelle du canal de propagation entre la source interférente et le capteur.

De l'une ou l'autre des étapes précédentes, on déduit outre le signal originaire de la source interférente $s_{int}$ $(kT_e)$ le filtre de propagation $g_{int}$ entre l'émetteur interférent et le récepteur.

De plus, en introduisant dans la réplique $s_{int}$ des hypothèses Doppler et en se basant sur les répétitions et récurrences du signal $s_{int}$, on peut estimer finement les dérives relatives des oscillateurs, des mélangeurs de fréquence et des horloges du capteur.

Etape 6B) Lorsque l'émetteur interférant choisi est soit fixe, soit de position et cinématique connues, et plus stable que le capteur, les dérives estimées sont utilisées dans l'application du procédé objet de l'invention pour augmenter les durées intégrations (i.e . augmenter le paramètre K) et améliorer par ce fait la sensibilité du procédé, sa résolution en Doppler et sa capacité à discriminer les réflecteurs ou les émetteurs de faible vitesse. Enfin, la répétition de cette extension du procédé sur plusieurs émetteurs interférents permet de raffiner encore les estimées avant la correction des signaux décrite dans la suite.

Etape 6C) On préfiltre ensuite le signal utile, composante du signal total sur le réseau d'antenne, en convoluant le signal de l'émetteur interférent $s_{int}$ par l'estimation précédente du filtre $g_{int}$ de propagation émetteur-récepteur, puis en soustrayant la contribution qui résulte de cette opération au signal total reçu sur l'antenne. De ce fait, on élimine par traitement (temporel) l'essentiel des contributions énergétiques résultant de l'émetteur interférent (trajet direct + trajets multiples), on augmente grandement dans le signal résultant de ce préfiltrage la contribution relative et le rapport signal sur interférence du signal utile émanant de l'émetteur ou du réflecteur. On applique ensuite le procédé de l'invention au signal x' résultant du signal d'entrée x à l'issue de ce préfiltrage, ce qui favorise donc la sensibilité globale et les performances d'ensemble.

Etape 6D) Par l'estimation et la compensation des dérives d'horloge et des dérives des oscillateurs locaux dans le récepteur, on augmente également grandement par cette extension la valeur K du nombre d'échantillons qui peuvent être utilisés dans la mise en oeuvre du procédé, donc la résolution Doppler, la capacité à discriminer des réflecteurs de faibles vitesses, ainsi que le gain de traitement et la sensibilité du procédé.

### Extension du procédé lorsque le bruit total est non circulaire

La figure 3 représente un autre exemple de réalisation, lorsque les interférences présentent une propriété de non-circularité, les étapes mises en oeuvre dans l'extension du procédé précédent exploitent cette propriété. Un tel récepteur peut s'envisager quelque soit la propriété de non-circularité du signal émis. Le cas le plus favorable correspond au cas où le signal émis est rectiligne, c'est-à-dire pour lequel son enveloppe complexe $s(kT_e)$ est à valeurs réelles. C'est le cas en particulier pour des signaux émis modulés en amplitude (AM, ASK) ou en phase à 2 états (BPSK). Dans ces conditions, il est intéressant de substituer à la statistique suffisante (8), la statistique $\hat{C}_{nc}(l, m, K)$, 10 figure 3, définie par

$$\hat{C}_{nc}(l, m, K) \quad \triangleq \quad (1/\hat{\hat{\pi}}_s) \; \hat{r}_{\widetilde{x}_m s}(lT_e)^{\dagger} \; \hat{R}_{\widetilde{x}_m}(lT_e)^{-1} \; \hat{r}_{\widetilde{x}_m s}(lT_e) \tag{17}$$

où $\widetilde{x}_m((k+l)T_e) \triangleq [x_m((k+l)T_e)^T, x_m((k+l)T_e)^{\dagger}]^T$ et où $\hat{r}_{\widetilde{x}_m s}(lT_e)$ et $\hat{R}x\overline{x}_m(lT_e)$ sont définis par (5) et (6) où $x_m((k+l)T_e)$ est remplacé par $\widetilde{x}_m((k+l)T_e)$, 6 figure 3. Le schéma fonctionnel de la statistique suffisante (16).

La statistique (17) s'étend pour des signaux émis devenant quasi-rectilignes après un prétraitement de dérotation. C'est en particulier le cas pour des signaux émis de type $\pi/2$-BPSK ou OQPSK ou encore certaines modulations de phase continue ou CPM (Continuous Phase Modulation), c'est-à-dire modulés en fréquence et à phase continue, comme par exemple les signaux MSK, GMSK. Dans ces conditions, la statistique suffisante (17) doit être mise en oeuvre mais en substituant aux vecteurs spatiaux $\widetilde{x}_m((k+l)T_e)$, les vecteurs spatio-temporels dérotés à L prises temporelles : $\widetilde{x}_{dm,st}((k+l)T_e) \triangleq [\widetilde{x}_{dm}((k+(L-1)/2)T_e)^T,...,\widetilde{x}_{dm}((k-(L-1)/2)T_e)^T]^T$ si L est impair et $\widetilde{x}_{dm,st}((k+l)T_e) \triangleq [\widetilde{x}_{dm}((k+L/2)T_e)^T,..., \widetilde{x}_{dm}((k-L/2)T_e)^T]^T$ si L est pair, où $\widetilde{x}_{dm}((k+l)T_e) \triangleq [\widetilde{x}_{dm}((k+l)T_e)^T, x_{dm}((k+l)T_e)^{\dagger}]^T$, $x_{dm}((k+l)T_e) \triangleq x_d((k+l)T_e) \, exp[-j2\pi m(k+d)/K]$, $x_d(t) \triangleq j^{-t/T}x(t)$ et T est la durée symbole du signal émis.

### Extension du procédé lorsque le vecteur directeur du reflecteur est connu ou supposé

### Extension nominale

Lorsque la propagation s'effectue en espace libre, le vecteur canal utile $h_s$ s'écrit $h_s \triangleq e^{j\phi s} \, \boldsymbol{s}$ où $\phi_s$ et $\boldsymbol{s}$ correspondent respectivement à la phase et au vecteur directeur du signal émanant de l'émetteur ou du réflecteur. Lorsqu'un balayage spatial de l'espace est envisagé, comme cela est le cas pour les structures conventionnelles de détection, on peut considérer que le vecteur s est connu lorsque la case spatiale de l'émetteur ou du réflecteur est scrutée. Dans ces conditions, sous les hypothèses A1 à A6 mais où l'hypothèse A4 est remplacée par l'hypothèse A4' d'une seule phase $\phi_s$ inconnue, les structures conventionnelles de détection ne s'avèrent optimales que pour des signaux émanant d'émetteurs ou de réflecteurs de faible puissance, et deviennent sous-optimales pour des signaux émanant d'émetteurs ou de réflecteurs de forte puissance. Dans ces conditions, l'optimisation des performances de détection pour tous les niveaux de signaux peut s'avérer utile dès lors que l'on vise des PFA très faibles.

Sous certaines conditions, une statistique suffisante pour la détection du signal connu $s(kT_e)$ sur la durée $0 \leq k \leq K-1$ dans la case spatiale s, la case distance 1 et la case Doppler m est donnée par, référencée 13, 12, 14 sur la figure 4,

$$\hat{F}(l, m, s, K) = (1 / \hat{\pi}_s) \; \frac{|s^\dagger \hat{R}_{xm}(lT_e)^{-1} \hat{r}_{xms}(lT_e)|^2}{(s^\dagger \hat{R}_{xm}(lT_e)^{-1} s)(1 - \hat{C}(l, m, K))} \qquad (18)$$

où $\hat{C}(l, m, K)$, 12, est défini par (8). L'expression (17) est une extension de (8) lorsque le vecteur s est connu. Pour des $\mathrm{SINR}_y$ faibles ($\mathrm{SINR}_y \ll 1$), on déduit de (16) que $\hat{C}(l, m, K) \ll 1$ et la statistique (17) peut-être approximée par

$$\hat{F}(l, m, s, K) \approx (1 / \hat{\pi}_s) \; \frac{|s^\dagger \hat{R}_{xm}(lT_e)^{-1} \hat{r}_{xms}(lT_e)|^2}{s^\dagger \hat{R}_{xm}(lT_e)^{-1} s} \;, \qquad \mathrm{SINR}_y \ll 1 \qquad (19)$$

ce qui correspond à la structure utilisée conventionnellement en formation de voie adaptative, $|s^\dagger \hat{R}_{xm}(lT_e)^{-1}\hat{r}_{xms}(lT_e)|^2$, 14, mais normalisée par le terme $s^\dagger \hat{R}_{xm}(lT_e)^{-1}s$, lequel permet une réglage du seuil de détection $\beta$, 15, pour une PFA donnée indépendamment de la puissance de bruit ou d'interférences en entrée. En revanche, pour des $\mathrm{SINR}_y$ qui ne sont plus faibles, le détecteur optimal à s connu exploite la statistique $\hat{C}(l, m, K)$ exposée avant dans la mesure où le filtre spatial $\hat{w}(l, m) \triangleq \hat{R}_{xm}(lT_e)^{-1}\hat{r}_{xms}(lT_e)$ converge dans ce cas plus vite que le filtre $\hat{w}_s(l, m) - \hat{R}_{xm}(lT_e)^{-1}s$ comme cela est montré dans [3]. Le schéma fonctionnel de la statistique suffisante (17) est présenté à la figure 4.

On dispose d'une référence bruit total seul et les étapes précédentes sont mises en oeuvre à partir d'une estimée de la matrice de bruit total seule $\hat{R}_{bTm}(lT_e)$, obtenue via les échantillons de référence bruit seul, à la place d'une estimée de la matrice de corrélation des observations, $\hat{R}_{xm}(lT_e)$.

**Extension non circulaire**

Lorsque les interférences présentent une propriété de non-circularité, on peut utiliser un récepteur capable d'exploiter cette propriété y compris lorsque s est supposé connu. Bien que la mise en oeuvre d'un tel récepteur soit envisageable quelque soit la propriété de non-circularité du signal émis, le cas le plus favorable correspond encore au cas où le signal émis est rectiligne. Dans ces conditions, il est intéressant de substituer à la statistique suffisante (17), la statistique $\hat{F}_{nc}(l, m, s, K)$ définie par

$$\hat{F}_{nc}(l, m, s, K) = (1 / \hat{\pi}_s)$$

$$\frac{\hat{r}_{\tilde{x}ms}(lT_e)^\dagger \hat{R}_{\tilde{x}m}(lT_e)^{-1} M [M^\dagger \hat{R}_{\tilde{x}m}(lT_e)^{-1} M]^{-1} M^\dagger \hat{R}_{\tilde{x}m}(lT_e)^{-1} \hat{r}_{\tilde{x}ms}(lT_e)}{1 - \hat{C}_{nc}(l, m, K)} \qquad (20)$$

où $M$ est la matrice (N x 2) définie par

$$M \quad \triangleq \quad \begin{pmatrix} s & 0 \\ & \\ 0 & s^* \end{pmatrix} \qquad\qquad (21)$$

La statistique (20) s'étend pour des signaux émis devenant quasi-rectilignes après un prétraitement de dérotation. Dans ces conditions, la statistique suffisante (20) doit être mise en oeuvre mais en substituant aux vecteurs spatiaux $\tilde{x}_m((k+l)T_e)$ les vecteurs spatio-temporels dérotés à L prises temporelles, $\tilde{x}_{dm,st}((k+l)T_e)$, définis au paragraphe précédent.

### Extension non circulaire avec référence bruit seule

Pour un certain nombre d'applications, une référence bruit plus interférences seules est disponible à travers la réception de données secondaires dépourvues de signal utile. C'est par exemple le cas en lorsque ces données secondaires peuvent émaner de cases Distance-Doppler voisines de celles associées à la présence de signal utile à détecter. Dans ces conditions, la matrice de corrélation, $\hat{R}_{\tilde{b}Tm}(lT_e)$, du bruit global étendu, $\tilde{b}_{Tm}(lT_e)$, peut-être estimée à partir de ces données secondaires par un quelconque estimateur de matrice de corrélation. Dès lors un détecteur non circulaire avec référence bruit total seul peut-être mis en oeuvre. Un tel détecteur peut correspondre soit au récepteur (17), si s est inconnu, soit au récepteur (20), si s est connu, mais en remplaçant $\hat{R}_{\tilde{x}m}(lT_e)$ par $\hat{R}_{\tilde{b}Tm}(lT_e)$ obtenue via les échantillons de référence bruit seul, à la place d'une estimée de la matrice de corrélation des observations étendue, $\hat{R}_{\tilde{x}m}(lT_e)$, où $\tilde{b}_m((k+l)T_e) \triangleq [b_m((k+l)T_e)^T, b_m((k+l)T_e)^{\dagger}]^T$.

De la même manière, des récepteurs à référence bruit total seul utilisant à la fois les données primaires (signal plus bruit total) et les données secondaires, peuvent également être construits suivant la même méthodologie.

### Extension pour des sources large bande

Lorsque les sources reçues (signaux utiles émanant de l'émetteur ou du réflecteur, interférences) sont à large bande pour le réseau d'antennes utilisé, ce qui ce produit dès que les rapports $B_e/f_0$, ou $\pi DB_e/c$ dépassent quelques %, où D est l'ouverture du réseau, $B_e$ la bande équivalente du signal (considérée comme incluse dans la bande de réception), $f_0$ la porteuse du signal et $c$ la vitesse de propagation, les performances des traitements précédents se dégradent, il est possible de mettre en oeuvre les deux variantes de réalisation suivantes :

la première consiste à structurer la bande de réception en plusieurs sous-bandes, étroites pour le réseau, et à mettre en oeuvre les traitements précédents sous-bande par sous-bande. L'avantage d'une telle stratégie est la mise en parallèle de traitements relativement simples.

la seconde consiste à mettre en oeuvre une structure spatio-temporelle de réception, Dans le cas où le signal n'est plus à bande étroite pour le réseau de capteurs ($\pi DB/c$ dépasse quelques %) : substituer aux vecteurs spatiaux $x_m((k+l)T_e)$ précédents les vecteurs spatio-temporels à $L$ prises temporelles : $x_{m,st}((k+l)T_e) \triangleq [x_m((k+(L-1)/2)T_e)^T,..., x_m((k-(L-1)/2)T_e)^T]^T$ si $L$ est impair et $x_{m,st}((k+l)T_e) \triangleq [x_{dm}((k+L/2)T_e)^T,..., x_{dm}((k-L/2)T_e)^T]^T$ si $L$ est pair.

Dans le cas où le signal est de plus à bande large devant la porteuse ($B_e/f_0$ dépassant quelques %) et dans le cas où la cinématique de l'émetteur ou du réflecteur nécessite de tenir compte des déformations induites sur le signal de réplique s : introduire dans les traitements précédant non seulement les variables retard $lT_e$ et Doppler $m/(KT_e)$ mais des variables additionnelles à l'ordre 1 telles que la compression retard et la compression Doppler sur la durée d'intégration K, à l'ordre 2 telles que les dérivées temporelles des variables précédentes, etc., écrire le signal $s_{l,m}$ correspondant à la transformation du signal originel s par les variables temporelles (retard-position, etc.) symbolisées par 1 et les variables fréquentielles (Doppler-cinématique, etc.) symbolisées par m, et utiliser le signal $s_{l,m}$ pour mettre en oeuvre les étapes du procédé selon les revendications précédentes et appliquer à ce signal $s_{l,m}$ le procédé selon l'invention.

Une telle démarche présente comme avantage de ne pas introduire de perte en résolution distance.

### Compléments de traitements

Des traitements complémentaires peuvent être envisagés à partir de l'une des structures décrites précédemment. En particulier, des techniques de goniométrie à haute résolution visant à localiser angulairement tous les émetteurs d'une case distance/doppler donnée peuvent être envisagées soit à partir des observations $x_m((k+l)T_e)$, $\tilde{x}_m((k+l)T_e)$ ou $\tilde{x}_{dm,st}((k+l)T_e)$ associées à cette case distance/doppler, soit à partir des résultats de corrélation des observations avec le signal émis $s(kT_e)$ sur des intervalles sur multiples ou sous-multiples de $K$, c'est à dire à partir des vecteurs $\hat{r}x_m s(l.K'T_e)$, K' divisant K ou K divisant K', c'est le cas de la goniométrie à référence.

Dans le cas où *s* est connu, ces techniques peuvent être mises en oeuvre après un filtrage spatial des observations limité à la case spatiale s.

Le procédé selon l'invention est, par exemple, utilisé avec un système de réception de position connue, et face à des émetteurs ou des réflecteurs sur lesquels des informations de synchronisation, de position ou de cinématique sont disponibles sur l'émission ou la réflexion des signaux exploités par l'invention, ce qui permet de déduire de l'invention des informations temporelles (retard/distance) absolues et des informations fréquentielles (Doppler vitesse/absolue) absolues à partir des informations relatives produites par le procédé objet de l'invention.

Selon un exemple de mise en oeuvre, l'utilisation du procédé est dupliquée sur plusieurs systèmes de réception synchronisés et communicants entre eux ou avec un centre d'exploitation, pour produire des informations de synchronisation, de position ou de cinématique sur les émetteurs et réflecteurs afin d'obtenir des information temporelles et fréquentielle absolues sur les émetteurs et les réflecteurs.

Le procédé selon l'invention peut être utilisé dans l'une des applications suivantes : mesure de canal de propagation (sondage), métrologie des réseaux de radiocommunication et radiodiffusion, démodulation et goniométrie d'émetteurs de communications, radar actif et passif, sonar actif, interrogation ami-ennemi plus connu sous le terme anglo-saxon « Identification Friend and Foe (IFF) ».

Selon une variante de réalisation, dans le procédé on remplace, par exemple, On remplace les vecteurs observations Dopplérisés et décalés temporellement $x_m((k+l)T_e)$, $\tilde{x}_m((k+l)T_e)$, $x_{m,st}((k+l)T_e)$ ou $\tilde{x}_{dm,st}((k+l)T_e)$ respectivement par des vecteurs observations non Dopplérisés ($m = 0$) et non décalés temporellement ($l = 0$) $x(kT_e)$, $\tilde{x}(kT_e)$, $x_{st}(kT_e)$ ou $\tilde{x}_{d,st}(kT_e)$, et en ce que le signal de référence $s(kT_e)$ est Dopplérisé et décalé temporellement, c'est-à-dire remplacé par $s_m((k+l)T_e) = s(kT_e)\exp[j2\pi m(k+l)/K]$.

Le procédé selon l'invention peut comporter des étapes de goniométrie classiques (haute résolution ou autres) ou de goniométrie à référence à partir des hypothèses retard-distance/doppler-cinématique ou espace/retard-distance/doppler-cinématique, comprenant la mise en oeuvre d'une technique de goniométrie classique ou à haute résolution :

- soit à partir des observations $\boldsymbol{x}_m((k+l)T_e)$, $\tilde{\boldsymbol{x}}_m((k+l)T_e)$, $x_{m,st}((k+l)T_e)$ ou $\tilde{\boldsymbol{x}}\, dm,st((k+1)T_e)$ associées à la distance/doppler ($l, m$) énergétique,

- soit à partir des résultats de corrélation avec le signal émis $s(kT_e)$ des observations $x_m((k+l)T_e)$, $\tilde{x}_m((k+l)T_e)$, $x_{m,st}((k+l)T_e)$ ou $\tilde{x}_{dm,s}((k+l)T_e)$ sur des intervalles sous-multiples de K

- dans le cas où le vecteur directeur $\boldsymbol{s}$ est connu, après un éventuel filtrage spatial des observations limitées à la case spatiale $\boldsymbol{s}$.

Le dispositif et le procédé selon l'invention permettent notamment de mesurer la propagation, de détecter et/ou de localiser un émetteur ou réflecteur fixe ou mobile dans un système comportant N capteurs recevant des signaux issus de l'émetteur ou du réflecteur comportant au moins un moyen permettant l'exécution des étapes du procédé.

Selon une variante de réalisation, le vecteur directeur de l'émetteur ou du réflecteur est connu et le procédé comporte les étapes suivantes

- Estimer le vecteur $\hat{r}_{x_m s}(lT_e)$ à partir des $K$ échantillons connus, $s(kT_e)$, du signal émis et des $K$ observations décalées en fréquences, $x_m((k+l)T_e) = x((k+l)T_e)\exp[-j2\pi m(k+l)/K]$, $0 \leq k \leq k - 1$,

- Estimer la matrice $\hat{R}_{x_m}(lT_e)$ à partir des $K$ observations décalées en fréquences, $x_m((k+l)T_e) = x((k+l)T_e)\exp[-j2\pi m(k+l)/k]$, $0 \leq k \leq K - 1$,

- Calculer la statistique suffisante
  $\hat{C}(l, m, K) \triangleq (1/\hat{\pi}_s)\, \hat{r}_{x_m}s(lT_e{}^\dagger\, \hat{R}_{x_m}(lT_e){-}1\, \hat{r}_{x_m}s(lT_e)$ où $\hat{\pi}_s$ est défini par (9),

- Calculer la statistique suffisante

$$\hat{F}(l, m, \boldsymbol{s}, K) = (1/\hat{\pi}_s)\,\frac{\left| \boldsymbol{s}^\dagger\, \hat{R}_{x_m}(lT_e)^{-1}\, \hat{\boldsymbol{r}}_{x_m}s(lT_e) \right|^2}{(\boldsymbol{s}^\dagger\, \hat{R}_{x_m}(lT_e)^{-1}\, \boldsymbol{s})\,(1 - \hat{C}(l, m, K))}$$

- Régler le seuil de détection pour une probabilité fausse alarme donnée,

- Comparer la valeur de la statistique $\hat{F}$(*l, m, s, K*) au seuil de détection fixé et dans le cas où il y a dépassement de cette valeur seuil, décréter la détection du réflecteur dans la case distance/doppler (*l, m*) et la case spatiale **s**,

- Estimer le retard et la distance relatifs de l'émetteur ou du réflecteur à partir de 1,

- Estimer le Doppler et la vitesse/cinématique relatifs de l'émetteur ou réflecteur à partir de m,

- Estimer la position angulaire du réflecteur à partir de **s**.

**Références**

[1] H.L. VAN TREES, "Detection, Estimation and Modulation Theory", Part I, II, III, Wiley and Sons, 1971

[2] J. DARRICAUT ,"Physique et Théorie du radar", Tomes 1, 2, 3, Editions Sodipe, 1993,

[3] R.A. MONZINGO, T.W MILLER , "Introduction to adaptive arrays", John Wiley and sons, 1981

[4] W.S. BURDIC, "Underwater Acoustic System Analysis", Prentice Hall Sig. Proc. Series 2nd edition, 19991

**Revendications**

**1.** Procédé pour déterminer un ou plusieurs paramètres de la réponse impulsionnelle d'un canal de propagation impliquant des émetteurs, des réflecteurs ou des capteurs fixes ou mobiles, pour détecter et pour déterminer les paramètres de position et de cinématique de ces émetteurs et réflecteurs, dans un système comportant *N* capteurs recevant des signaux issus des dits émetteurs ou de la réflexion sur les dits réflecteurs, avec *N* supérieur ou égal à 2 et comportant au moins les étapes suivantes :

    - utiliser le couplage de l'analyse spatiale et de l'analyse retard-distance/Doppler-cinématique afin de déterminer une fonction d'ambiguïté,
    - déterminer au moins une statistique suffisante $\hat{C}$(*l, m, K*) correspondant à la corrélation entre le signal connu *s*(*kTe*) correspondant à l'enveloppe complexe du signal émis, échantillonné à la période *Te,* considéré sur une durée d'intégration *de K* échantillons (indice *k*=0,...,*K*-1), auquel on fait subir une éventuelle transformation liée aux hypothèses sur les positions et cinématiques des émetteurs récepteurs et réflecteurs et sur les fluctuations de la propagation, et la sortie d'un filtre spatial *w(l,m),* où *l* symbolise un ensemble d'hypothèses temporelles et où *m* symbolise un ensemble d'hypothèses fréquentielles, qui prend en entrée les observations $x_m((k+l)T_e)$, $0 \le k \le K - 1$, elles aussi échantillonnées à la période *Te* , déterminer les valeurs du couple (*l, m*) en comparant la valeur de la statistique $\hat{C}$(*l, m, K*) pour le couple (*l, m*) à une valeur seuil de détection, et **caractérisé en ce que**, pour les cas où les paramètres temporels symbolisés par *l* se réduisent à un retard ou à une distance, et où les paramètres cinématiques symbolisés par *m* se réduisent à un Doppler ou à une vitesse relative le procédé comporte au moins les étapes suivantes :

        pour chaque hypothèse retard *l* et chaque hypothèse Doppler *m*, *m* en indice des variables $x_m$ et $r_{x_mS}$ , la durée d'intégration étant au maximum *KTe,* la résolution et le pas d'échantillonnage en Doppler peuvent être pris à *1/KT$_e$* , et le décalage Doppler estimé est alors un multiple de 1/*KT$_e$* **caractérisé par** l'indice *m* = 0,...,K-1

        - Estimer le vecteur $\hat{r}x_{ms}(lT_e)$ à partir des *K* échantillons connus, *s(kT$_e$),* du signal émis et des *K* observations décalées en fréquences, $x_m((k+l)T_e) = x((k+l)T_e) \exp[-j2\pi m(k+l)/K]$, $0 \le k \le K - 1$, par la statistique :

$$\hat{r}_{x_m s}(lT_e) \;\; \triangleq \;\; \frac{1}{K} \sum_{k=0}^{K-1} x_m((k{+}l)T_e)\, s(kT_e)^*$$

- Estimer la matrice $\hat{R}x_m(lT_e)$ à partir des $K$ observations décalées en fréquences, $x_m((k{+}l)T_e) = x((k{+}l)T_e)\exp[-j2\pi m(k{+}l)/K]$, $0 \leq k \leq K{-}1$, par la statistique :

$$\hat{R}_{x_m}(lT_e) \;\; \triangleq \;\; \frac{1}{K} \sum_{k=0}^{K-1} x_m((k{+}l)T_e)\, x_m((k{+}l)T_e)^{\dagger}$$

- Calculer la statistique suffisante
$\hat{C}(l, m, K) \triangleq (1/\hat{\pi}_s)\, \hat{r}_{x_m s}(lTe)\,\dagger\, \hat{R}x_m(lT_e)^{-1}\, \hat{r}_{m s}(lT_e)$ où $\hat{\pi}_s$ est définie par l'estimée au sens des moindres carrés de la puissance moyenne du signal connu, par $\hat{\pi}_s = [\,\frac{1}{K} \sum_{k=0}^{K-1} /s(kT_e)/^2$

ledit procédé étant **caractérisé en ce qu'**il comporte au moins les étapes suivantes :

- Calculer la statistique suffisante
où s est le vecteur directeur du signal émanant de l'émetteur ou du réflecteur

$$\hat{F}(l, m, s, K) \;=\; (1/\hat{\pi}_s)\; \frac{/s^{\dagger}\, \hat{R}_{x_m}(lT_e)^{-1}\, \hat{r}_{x_m s}(lT_e)/^2}{(s^{\dagger}\, \hat{R}_{x_m}(lT_e)^{-1}\, s)\,(1 - \hat{C}(l, m, K))}$$

- Régler le seuil de détection pour une probabilité de fausse alarme donnée,
- Comparer la valeur de la statistique $\hat{F}(l, m, s, K)$ au seuil de détection fixé et dans le cas où il y a dépassement de cette valeur seuil, décréter la détection du réflecteur dans la case distance/doppler $(l, m)$ et la case spatiale s,
- Estimer le retard et la distance relatifs de l'émetteur ou du réflecteur à partir de $l$
- Estimer le Doppler et la vitesse relatifs de l'émetteur ou du réflecteur à partir de $m$,
- Estimer la position angulaire de l'émetteur ou du réflecteur à partir de s,

2. Procédé selon la revendication 1, **caractérisé en ce que** dans les cas plus complexes,

2A) on introduit dans la définition des paramètres temporels, tels que retards-positions symbolisés par l, dans la définition des paramètres fréquentiels, tels que Doppler-cinématique, symbolisés par m, et dans celle du signal connu s à chaque hypothèse $l$ et $m$, les variables et les transformations du signal induites par les mouvements de l'émetteur du récepteur ou du réflecteur, ainsi que par les fluctuations du canal de propagation, dépendant de l'hypothèse retard-position, de l'hypothèse Doppler-vitesse relative, de la durée d'intégration du traitement, de la bande équivalente du signal, de la durée équivalente du signal et de sa périodicité lorsqu'il est impulsif pendant la durée d'intégration du traitement, de la fluctuation du retard sur cette durée, de la fluctuation du Doppler sur cette durée,
2B) on utilise le signal $s_{l,m}$ obtenu à partir de la transformation de $s$ en fonction des hypothèses temporelles symbolisées par $l$ et des hypothèses fréquentielles symbolisées par $m$.

3. Procédé selon la revendication 2, **caractérisé en ce que** la fluctuation du retard est une fluctuation modélisée au premier ordre par une rampe temporelle.

**4.** Procédé selon la revendication 2, **caractérisé en ce que** la fluctuation du Doppler est modélisée au premier ordre par une rampe Doppler.

**5.** Procédé selon l'une des revendications 1 et 2, **caractérisé en ce que** pour la détection d'un émetteur ou d'un réflecteur dont le signal subit des interférences élevées, on utilise un signal $x'_m((k+l)T_e)$ et une réplique s' en lieu et place du signal d'entrée $xm((k+l)T_e$ et de la réplique originelle $s$, le signal $x'_m((k+l)T_e))$ étant obtenu à partir de du signal $xm((k+l)T_e)$ et la réplique s' étant obtenue à partir de la réplique originelle $s$ ou de la réplique transformée $s_{l,m}$ au moyen d'opérations faisant intervenir des filtres spatio- temporels améliorateurs tels que les suivants :

5A) pour chaque émetteur interférant :

estimation de la réponse impulsionnelle $g_{int}$ du filtre de propagation de l'émetteur inteférent au récepteur d'après une estimation $S_{int}$» de son signal émis $s_{int}$ par la minimisation du critère

$$\hat{\varepsilon}_{int}(l_0,L) \triangleq \frac{1}{L}.\sum_{0}^{L-1} \ /x((l_0+l)T_e) - g_{int}^{\dagger}S_{int,,m,;l}»\ /^2$$

en considérant la réplique $S_{int}»=(S_{int}»((l_o+l)T_e),s_{int}»((l_0+l+1)T_e),...,s_{int}»((l_0+l+L-1)T_e))^T$ obtenue soit par connaissance a priori totale du signal interférent originel, avec $S_{int}^*=S_{int}$, soit par connaissance a priori partielle du signal interférent originel $S_{int}» = S_{int}$ sur un nombre $K$»d'échantillons à la période $Te$, soit par démodulation/égalisation du signal interférent originel par tout moyen connu de l'homme de l'art avec $S_{int}» \approx S_{int}$, ou en considérant la réplique transformée $S_{int,m,l}»=(S_{intm,l}»((l_0+l)T_e), s_{intm,l}»((l_0+l+1)T_e),...,s_{intm,l}»((l_0+l+L-1)T_e))^T$ compte tenu d'une hypothèse $l, m$ sur la position et la cinématique de l'émetteur interférant produisant $S_{int}$

5B) pour un ou plusieurs émetteurs interférents fixes ou de cinématique connue, et choisis en fonction de leur stabilité en fréquence et en temps,

on introduit sur la réplique $S_{int}$ différentes hypothèses en fréquence et on exploite des récurrences présentes dans la réplique afin d'estimer finement sur de grandes longueurs d'intégration $K$ les déviations en fréquence et en temps relativement à l'émetteur interférent, on estime des dérives relatives à l'émetteur interférent des oscillateurs locaux des mélangeurs et des horloges du système de réception et d'échantillonnage des signaux utilisés pour mettre en oeuvre l'invention.

**6.** Procédé selon la revendication 5, **caractérisé en ce qu'**au cours de l'étape 5B :
on actualise le filtre de propagation $g_{int}$ (étape 5A) associé à l'émetteur interférent, et

6A) pour chaque émetteur interférent,
on exécute une convolution du signal interférent originel $S_{int}$ ou transformé $s_{intm,l}$ par le filtre de propagation $g_{int}$ qui lui est associé, on soustrait le signal résultant de cette opération au signal total reçu,
6B ) on compense des dérives en fréquence et en temps

- soit sur le signal résultant de $x_m((k+l)T_e)$ après les opérations précédentes, afin produire le signal $x'_m((k+l)T_e)$, s restant alors inchangé ($s'=s$)
- soit sur le signal de réplique utilisée dans le procédé, $s$ selon la revendication (1) qui devient ainsi s', $s_{m,l}$ selon la revendication (2) qui devient ainsi $s_{m,l}'$

6C) on met en oeuvre les étapes selon la revendication 1 à $x'_m$ et s'
6D) on met en oeuvre les étapes selon la revendication 2 à $x'_m$ et $s_{m,l}'$

**7.** Procédé selon l'une des revendications 1, 2 et 5, **caractérisé en ce que** l'on utilise un vecteur d'observation $\tilde{x}_m((k+l)T_e) \triangleq [x_m((k+l)T_e)^T, x_m((k+l)T_e)^\dagger]^T$ composé du vecteur d'observation et de son complexe conjugué et **en ce que** l'on met en oeuvre les étapes des revendications 1 et 2 à partir de $\tilde{x}_m((k+l)T_e)$ en lieu et place de $x_m((k+l)T_e)$.

**8.** Procédé selon la revendication 7, **caractérisé en ce que** l'on dispose en plus d'une référence bruit total seul et **en ce que** l'on met en oeuvre les étapes de la revendication 1 et 2 en utilisant une estimée de la matrice de bruit total seule étendue, $\hat{\tilde{R}}_{bTm}(lT_e)$, obtenue via les échantillons de référence bruit seul, à la place d'une estimée de la matrice de corrélation des observations étendue, $\hat{\tilde{R}}_{\tilde{x}m}(lT_e)$,

où $\tilde{b}_m((k+l)T_e) \triangleq [b_m((k+l)T_e)^T, b_m((k+1)T_e)^{\dagger}]^T$

**9.** Procédé selon l'un des revendications 1, 2, 3, 4 ou 8, dans lequel les signaux émis sont quasi-rectilignes après dérotation et les interférences non circulaires, ou que les canaux de propagation s'étalent dans le temps, caractérisé en que l'on utilise des vecteurs spatio-temporels dérotés pour les modulations quasi-rectilignes ou non dérotés pour les modulations rectilignes à L prises temporelles

$\tilde{x}_{dm,st}((k+l)T_e) [\tilde{x}_{dm}((k+(L-1)/2)T_e)^T,..., \tilde{x}_{dm}((k-(L-1)/2)T_e)^T]^T$ si $L$ *est* impair et

$\tilde{x}_{dm,st}(k+1)T_e) \triangleq [\tilde{x}_{dm}((k + L/2)T_e)^T,..., \tilde{x}_{dm}((k - L/2)T_e)^T]^T$ si $L$ est pair,

où $\tilde{x}_{dm}((k+l)T_e) \triangleq [x_{dm}((k+l)T_e)^T, x_{dm}((k+1)T_e)^{\dagger}]^T$,

$$x_{dm}((k+l)T_e) \triangleq x_d((k+l)T_e) \exp[-j2\pi m(k+l)/K],$$

$x_d(t) \triangleq j^{-t/T}x(t)$ et $T$ est la durée symbole.

**10.** Procédé selon l'une des revendications 1, 2, 3, 6, 7 ou 8, **caractérisé en ce que** l'on dispose d'une référence bruit total seul et **en ce que** l'on met en oeuvre les étapes de la revendication 1, 2 ou 6 à partir d'une estimée de la matrice de bruit total seule, $\hat{R}_{bTm}(lTe)$, obtenue via les échantillons de référence bruit seul, à la place d'une estimée de la matrice de corrélation des observations, $\hat{R}_{xm}(lTe)$.

**11.** Procédé selon l'une des revendications 1, 2, 3, 6, 7 ou 8, dans lequel le vecteur directeur du réflecteur est connu pour des signaux émis rectilignes et des interférences potentiellement non circulaires **caractérisé en ce qu'**il comporte au moins les étapes suivantes :

calculer la statistique suffisante

$$\hat{C}_{nc}(l, m, K) \triangleq (1 / \hat{\pi}_s)\ \hat{r}_{\tilde{x}m s}(lT_e)^{\dagger}\ \hat{R}_{\tilde{x}m}(lT_e)^{-1} \hat{r}_{\tilde{x}m s}(lT_e)$$

construire une matrice

$$M \triangleq \begin{pmatrix} s & 0 \\ 0 & s^* \end{pmatrix}$$

construire une statistique

$\hat{F}nc(l, m, s, K) = (1 / \hat{\pi}_s).$

$$\frac{\hat{r}_{\tilde{x}m s}(lT_e)^{\dagger}\ \hat{R}_{\tilde{x}m}(lT_e)^{-1} M [M^{\dagger}\ \hat{R}_{\tilde{x}m}(lT_e)^{-1} M]^{-1} M^{\dagger}\ \hat{R}_{\tilde{x}m}(lT_e)^{-1} \hat{r}_{\tilde{x}m s}(lT_e)}{1 - \hat{C}_{nc}(l, m, K)}$$

régler le seuil de détection pour une probabilité de fausse alarme donnée,

Comparer la valeur de la statistique $\hat{F}_{nc}(l, m, s, K)$ au seuil et détecter l'émetteur ou le réflecteur dans la case distance/doppler *(l, m)* et la case spatiale *s* si il y a dépassement,
Estimer le retard et la distance relatifs de l'émetteur ou du réflecteur à partir de *l*,
Estimer le Doppler et la vitesse/cinématique relatifs de l'émetteur ou du réflecteur à partir de *m*,
Estimer la position angulaire de l'émetteur ou du réflecteur à partir de *s*.

**12.** Procédés selon l'une des revendications 1, 2, 3, 7, 8, ou 9, **caractérisé en ce que** l'on dispose en plus d'une référence bruit total seul et **en ce que** l'on met en oeuvre les étapes de la revendication 12 en utilisant une estimée de la matrice de bruit total seule étendue, $\hat{A}_{\tilde{b}Tm}(lT_e)$, obtenue via les échantillons de référence bruit seul, à la place d'une estimée de la matrice de corrélation des observations étendue, $\hat{R}_{\tilde{x}m}(lTe)$, où $\tilde{b}_m((k+l)T_e) \triangleq [b_m((k+l)T_e)^\mathsf{T}\, \boldsymbol{b}_m((k+l)T_e)^\dagger]^\mathsf{T}$.

**13.** Procédé selon l'une des revendications précédentes, **caractérisé en ce que** l'on remplace les vecteurs observations Dopplérisés et décalés temporellement $x_m((k+l)T_e)$, $\tilde{x}_m((k+l)T_e)$, $x_{m,st}((k+l)T_e)$ ou $\tilde{x}_{dm,st}((K+l)T_e)$ respectivement par des vecteurs observations non Dopplérisés ($m = 0$) et non décalés temporellement ($l = 0$) $x(kT_e)$, $\tilde{x}(kT_e)$, $x_{st}(kT_e)$ ou $\tilde{x}_{d,st}(kT_e)$, et **en ce que** le signal de référence $s(kT_e)$ est Dopplérisé et décalé temporellement, c'est-à-dire remplacé par $s_m((k+l)T_e) = s(kT_e)\, \exp[j2\pi m(k+l)/K]$.

**14.** Procédé selon l'une des revendications précédentes, **caractérisé en ce que** lorsque les signaux émanant de l'émetteur du réflecteur ou des interférences sont à large bande pour le réseau d'antennes utilisé, ce qui ce produit dès que les rapports $B_e/f_0$ ou $\pi DB_e/c$ dépassent quelques %, où $D$ est l'ouverture du réseau, $B_e$ la bande équivalente du signal (considérée comme incluse dans la bande de *réception*) $f_0$ la porteuse du signal et $c$ la vitesse de propagation, on met en oeuvre l'une des variantes de réalisation suivantes :

- Structuration la bande de réception en plusieurs sous-bandes, étroites pour le réseau ; mise en oeuvre des traitements objet des revendications précédentes précédents sous-bande par sous-bande,
- Mise en oeuvre une structure spatio-temporelle de réception,

• Dans le cas où le signal n'est plus à bande étroite pour le réseau de capteurs ($\pi DB_e/c$ dépasse quelques %) : substituer aux vecteurs spatiaux $x_m((k+l)T_e)$ précédents les vecteurs spatio-temporels à $L$ prises temporelles : $x_{m,st}((k+l)T_e) \triangleq [x_m((k+(L-1)/2)T_e)^\mathsf{T},..., x_m((k - (L-1)/2)T_e)^\mathsf{T}]^\mathsf{T}$ si $L$ *est* impair et $x_{m,st}((k+l)T_e) \triangleq [xd_m((k + L/2)T_e)^\mathsf{T},..., x_{dm}((k - L/2)T_e)^\mathsf{T}]^\mathsf{T}$ si $L$ *est* pair.

• Dans le cas où le signal est de plus à bande large devant la porteuse ($B_e/f_0$ dépassant quelques %) et dans le cas où la cinématique de l'émetteur ou du réflecteur nécessite de tenir compte des déformations induites sur le signal de réplique $s$ : introduire dans les traitements précédents non seulement les variables retard et Doppler mais des variables additionnelles à l'ordre 1 telles que la compression retard et la compression Doppler sur la durée d'intégration $K$, à l'ordre 2 telles que les dérivées temporelles des variables précédentes, etc., écrire le signal $s_{l,m}$ correspondant à la transformation du signal originel $s$ par les variables temporelles (retard-position, etc.) symbolisées par $l$ et les variables fréquentielles (Doppler-cinématique, etc.) symbolisées par m, et utiliser le signal $s_{l,m}$ pour mettre en oeuvre les étapes du procédé selon les revendications précédentes.

**15.** Procédé selon l'une des revendications précédentes, **caractérisé en ce qu'**il comporte des étapes de goniométrie classiques (haute résolution ou autres) ou de goniométrie à référence à partir des hypothèses retard-distance/doppler-cinématique ou espace/retard-distance/doppler-cinématique, comprenant la mise en oeuvre d'une technique de goniométrie classique ou à haute résolution :

• soit à partir des observations $x_m((k+l)T_e)$, $\tilde{x}_m((k+l)T_e)$, $x_{m,st}((k+l)T_e)$ ou $\tilde{x}_{dm,st}((k+l)T_e)$ associées à la distance/doppler *(l, m)* énergétique,
• soit à partir des résultats de corrélation avec le signal émis $s(kT_e)$ des observations $x_m((k+l)T_e)$, $\tilde{x}_m((k+l)T_e)$, $x_{m,st}((k+l)T_e)$ ou $\tilde{x}_{dm,st}((k+l)T_e)$ sur des intervalles sous-multiples de K,
• dans le cas où le vecteur directeur s est connu, après un éventuel filtrage spatial des observations limitées à la case spatiale s.

**16.** Dispositif permettant de mesurer la propagation, de détecter et/ou localiser un émetteur ou réflecteur fixe ou mobile dans un système comportant N capteurs recevant des signaux issus de l'émetteur ou du réflecteur **caractérisé en ce qu'**il comporte au moins un moyen adapté à exécuter les étapes du procédé selon l'une des revendications 1 à 15.

**Claims**

1.  A method for determining one or more parameters of the pulse response of a propagation channel involving emitters, reflectors or fixed or mobile sensors, for detecting and for determining the position and kinematic parameters of said emitters and reflectors in a system comprising N sensors receiving signals coming from said emitters or from the reflection on said reflectors, with N being greater than or equal to 2 and comprising at least the following steps:

    • using the pairing of space analysis and delay-distance/Doppler-kinematic analysis in order to determine an ambiguity function,
    • determining at least one sufficient statistic $\hat{C}(l, m, k)$ that corresponds to the correlation between the known signal s(kTe) that corresponds to the complex envelope of the emitted signal, sampled during the period Te, considered over a duration of integration of K samples (index k=0,...,K-1), which undergoes a possible transformation associated with the hypotheses concerning the positions and kinematics of the emitters, receivers and reflectors and concerning the propagation fluctuations, and the output of a space filter w(l, m), where 1 symbolises a set of time hypotheses and where m symbolises a set of frequency hypotheses, which uses as input the observations $x_m((k+l)Te)$, 0≤k≤-1, which are also sampled during the period Te, determining the values of the pair (l, m) by comparing the value of the statistic $\hat{C}(l,m, k)$ for the pair (l, m) with a detection threshold value, **characterised in that**, for cases where the time parameters symbolised by 1 are reduced to a delay or to a distance, and where the kinematic parameters symbolised by m are reduced to a Doppler or to a relative speed, the method comprises at least the following steps:

    for each delay hypothesis 1 and each Doppler hypothesis m, m is an index of the variables $x_m$ and $r_{Xms}$, the duration of integration being at maximum KTe, the resolution and the Doppler sampling pitch can be taken to be 1/KTe, and the estimated Doppler shift is then a multiple of 1/KTe **characterised by** the index m=0,...,K-1,

    • estimating the vector $\hat{r}_{x_ms}(lT_e)$ from K known samples, s(kTe), from the emitted signal and from the K frequency shifted observations, $x_m((k+l) Te) = x((k+l) Te) \exp[-j27\pi m(k+l)/K]$, 0≤k≤K-1, by the statistic:

$$\hat{r}_{xms}(lT_e) \triangleq \frac{1}{K} \sum_{k=0}^{K-1} x_m((k+l)T_e)\, s(kT_e)^*$$

    - estimating the matrix $\hat{R}_{x_m}(lT_e)$ from the K frequency shifted observations, $x_m((k+1) Te) = x((k+1) Te) \exp[-j2\pi m(k+1)/K]$, 0≤k≤K-1, by the statistic:

$$\hat{R}_{xm}(lT_e) \triangleq \frac{1}{K} \sum_{k=0}^{K-1} x_m((k+l)T_e)\, x_m((k+l)T_e)^{\dagger}$$

    - calculating the sufficient statistic

$$\hat{C}(l, m, K) \triangleq (1/\hat{\pi}_s)\, \hat{r}_{xms}(lT_e)^{\dagger}\, \hat{R}_{xm}(lT_e)^{-1}\, \hat{r}_{xms}(lT_e) \text{ where } \hat{\pi}_s \text{ is defined}$$

    in terms of the least squares estimate of the mean power of the known signal,

$$\hat{\pi}_S = [\frac{1}{K} \sum_{k=0}^{K-1} |s(kT_e)|^2$$

    said method being **characterised in that** it comprises at least the following steps:
    - calculating the sufficient statistic

$$\hat{F}(l, m, s, K) = (I / \hat{\pi_s}) \frac{|s^{\dagger} \hat{R}_{x_m}(lT_e)^{-I} \hat{r}_{x_m s}(lT_e)|^2}{(s^{\dagger} \hat{R}_{x_m}(lT_e)^{-I} s)(I - \hat{C}(l, m, K))}$$

where s is the direction vector of the signal originating from the emitter or the reflector,
- setting the detection threshold for a given false alarm probability,
- comparing the value of the statistic $\hat{F}(l, m,$ s, $k)$ with the fixed detection threshold and, in the event that this threshold value is exceeded, determining the detection of the reflector in the distance/Doppler (l, m) box and the space box s,
- estimating the relative delay and distance of the emitter or of the reflector from l,
- estimating the relative Doppler and speed of the emitter or the reflector from m,
- estimating the angular position of the emitter or the reflector from s.

2.  The method according to claim 1, **characterised in that** in the more complex cases,

2A) the variables and the transformations of the signal induced by the movements of the emitter, the receiver or the reflector, as well as by the fluctuations of the propagation channel, are introduced into the definition of the time parameters, such as delays-positions symbolised by l, into the definition of the frequency parameters, such as Doppler-kinematic, symbolised by m, and into that of the known signal s on each hypothesis l and m, as a function of the delay-position hypothesis, the Doppler-relative speed hypothesis, the duration of integration of the processing, the equivalent bandwidth of the signal, the equivalent duration of the signal and its periodicity when it is pulsed throughout the duration of integration of the processing, of the fluctuation of the delay over this duration, of the fluctuation of the Doppler over this duration,
2B) the signal $s_{l,m}$ that is obtained from the transformation of s is used as a function of the time hypotheses symbolised by l and the frequency hypotheses symbolised by m.

3.  The method according to claim 2, **characterised in that** the fluctuation of the delay is a fluctuation that is modelled in the first order by a time ramp.

4.  The method according to claim 2, **characterised in that** the Doppler fluctuation is modelled in the first order by a Doppler ramp.

5.  The method according to any one of claims 1 to 2, **characterised in that** for the detection of an emitter or of a reflector, the signal of which is subject to high interference, a signal $x'_m((k+1)Te)$ and a replica s' are used instead of the input signal $x_m((k+1)Te)$ and the original replica s, the signal $x'_m((k+1)Te)$ being obtained from the signal $x_m((k+1)Te)$ and the replica s' being obtained from the original replica s or from the transformed replica $s_{l,m}$ by means of operations that use space-time filter enhancers such as the following:

5A) for each interfering emitter:

estimating the pulse response $g_{int}$ of the propagation filter of the emitter that interferes with the receiver after an estimation $S_{im}$" of its emitted signal $S_{int}$ by the minimisation of the criterion $$\hat{\mathcal{E}}_{int}(l_0, L) \triangleq \frac{1}{L} \cdot \sum_{0}^{L-1} |x((l_0+l)T_e) - g_{int}^{\dagger} S_{int..m..t}''|^2$$ whilst considering the replica $S_{im}$"$=(S_{int}*((10+l)T_e), S_{int}''((10+l+1)Te),...,S_{int}''((10+l+L-1)Te))T$ that is obtained either by full prior knowledge of the original interfering signal, where $s_{int}''=s_{int}$, or by partial prior knowledge of the original interfering signal $s_{int}''=s_{int}t$ on a number K" of samples during the period Te, or by demodulation/equalisation of the original interfering signal by any means known by a person skilled in the art with $s_{int}''=s_{int}$, or whilst considering the transformed replica $S_{im}$"$=(S_{int}*((10+1)Te), S_{int}''((10+1+1)Te),...,S_{int}''((10+1+L-1)Te))T$ taking into account a hypothesis 1, m on the position and the kinematic of the interfering emitter producing sint,

5B) for one or more interfering emitters, fixed or of known kinematic, which are selected as a function of their frequency and time stability,
introducing different frequency hypotheses into the replica $S_{int}$ and using the recurrences that are present in the replica so as to accurately estimate, over significant integration lengths K, the frequency and time deviations relative to the interfering emitter, estimating deviations relative to the interfering emitter, of the local oscillators, of the mixers and of the clocks of the system for receiving and sampling the signals used to implement the invention.

6. The method according to claim 5, **characterised in that** during step 5B:
the propagation filter $g_{int}$ (step 5A) that is associated with the interfering emitter is updated, and

6A) for each interfering emitter,
a convolution of the original $s_{int}$ or transformed $s_{intm,l}$ interfering signal is executed by the propagation filter $g_{int}$ with which it is associated, the signal resulting from this operation is subtracted from the total received signal,
6B) the frequency and time deviations are compensated

- either on the signal resulting from $x_m((k+l)Te)$ after the preceding operations, so as to produce the signal $x'_m((k+l)Te)$, with s then remaining unchanged (s'=s)
- or on the replica signal used in the method, s according to claim 1, which then becomes s', $s_{m,l}$ according to claim 2, which then becomes $s_{m,l}'$

6C) the steps according to claim 1 at $x'_m$ and s' are implemented,
6D) the steps according to claim 2 at $x'_m$ and $s_{m,1'}$ are implemented.

7. The method according to one of claims 1, 2 and 5, **characterised in that** an observation vector is used $\tilde{x}_m((k+l)T_e) \triangleq [x_m((k+l)T_e)^T, x_m((k+l)T_e)^\dagger)^T$ that is composed of the observation vector and its complex conjugate, and **in that** the steps of claims 1 and 2 are implemented from $\tilde{x}_m((k+l)T_e)$ instead of $x_m((k+l)Te)$.

8. The method according to claim 7, **characterised in that** a total noise only reference is also available and **in that** the steps of claims 1 and 2 are implemented using an estimate of the extended total noise only matrix, $\hat{R}_{\tilde{b}Tm}^{(lTe)}$, obtained via the noise only reference samples, in place of an estimate of the correlation matrix of the extended observations, $\hat{R}_{\tilde{x}m}^{(lTe)}$, where $\tilde{b}_m((k+l)T_e) \triangleq [b_m((k+l)T_e)^T, b_m((k+l)T_e)^\dagger]^T$.

9. The method according to any one of claims 1, 2, 3, 4 and 8, wherein the emitted signals are quasi-rectilinear after derotation and the interferences are non-circular, or wherein the propagation channels are spread over time, **characterised in that** space-time vectors are used that are derotated for the quasi-rectilinear modulations or non-derotated for the rectilinear modulations at L time points $\tilde{x}_{dm,st}((k+l)T_e) \triangleq [\tilde{x}_{dm}((k+(L-1)/2)T_e)^T,..., \tilde{x}_{dm}((k-(L-1)/2)T_e)^T]^T$ if L is odd and
$\tilde{x}_{dm,st}((k+l)T_e) \triangleq [\tilde{x}_{dm}((k+L/2)T_e)^T,...., \tilde{x}_{dm}((k-L/2)T_e)^T]^T$ if L is even,
where $\tilde{x}dm((k+l)T_e) \triangleq [x_{dm}((k+l)T_e)^T, x_{dm}((k+l)T_e)^\dagger]^T$,

$$x_{dm}((k+l)T_e) \triangleq x_d((k+l)T_e)\exp[-j2\pi m(k+l)/K],$$

$x_d(t) \triangleq j^{-t/T}x(t)$ and T is the symbol duration.

10. The method according to any one of claims 1, 2, 3, 6, 7 and 8, **characterised in that** a total noise only reference is available and **in that** the steps of claim 1, 2 or 6 are implemented from an estimate of the total noise only matrix, $\hat{R}_{bTm}(lT_e)$, obtained via the noise only reference samples, instead of an estimate of the correlation matrix of the observations, $\hat{R}x_m(lT_e)$.

11. The method according to any one of claims 1, 2, 3, 6, 7 and 8, wherein the directing vector of the reflector is known for the emitted rectilinear signals and the potentially non-circular interferences, **characterised in that** it comprises at least the following steps:

calculating the sufficient statistic

$$\hat{C}_{nc}(l, m, K) \triangleq (1/\hat{\pi}_s) \, \hat{r}_{\tilde{x}ms}(lT_e)^\dagger \, \hat{\bar{R}}_{\tilde{x}m}(lT_e)^{-1} \, \hat{r}_{\tilde{x}ms}(lT_e)$$

constructing a matrix

$$M \triangleq \begin{pmatrix} s & 0 \\ 0 & s^* \end{pmatrix}$$

constructing a statistic

$$\hat{F}_{nc}(l, m, s, K) = (1 / \hat{\pi}_s).$$

$$\frac{\hat{r}_{\tilde{x}ms}(lT_e)^\dagger \hat{R}_{\tilde{x}m}(lT_e)^{-1} M [M^\dagger \hat{R}_{\tilde{x}m}(lT_e)^{-1} M]^{-1} M^\dagger \hat{R}_{\tilde{x}m}(lT_e)^{-1} \hat{r}_{\tilde{x}ms}(lT_e)}{1 - \hat{C}_{nc}(l, m, K)}$$

setting the detection threshold for a given false alarm probability,
comparing the value of the statistic $\hat{F}_{nc}(l,m,s, k)$ with the threshold and detecting the emitter or the reflector in the distance/Doppler box (1, m) and the space box s if the threshold is exceeded,
estimating the relative delay and distance of the emitter or the reflector from l,
estimating the relative Doppler and speed/kinematic of the emitter or the reflector from m,
estimating the angular position of the emitter or the reflector from s.

12. The method according to any one of claims 1, 2, 3, 7, 8 and 9, **characterised in that** a total noise only reference is also available and **in that** the steps of claim 12 are implemented using an estimate of the extended total noise only matrix $\hat{R}_{\tilde{b}Tm}(lT_e)$ obtained via the noise only reference samples, instead of an estimate of the correlation matrix of the extended observations, $\hat{R}_{\tilde{x}m}(lT_e)$. where $\tilde{b}_m((k+l)T_e) \triangle [b_m((k+l)T_e), b_m((k+l)T_e)^\dagger]^T$.

13. The method according to any one of the preceding claims, **characterised in that** the Doppler shifted and time shifted observation vectors $x_m((k+l)T_e)$, $\tilde{x}_m((k+l)T_e)$, $x_{m,st}((k+l)T_e)$ or $\tilde{x}_{dm.sr}((k+l)T_e)$ are respectively replaced by non-Doppler shifted (m=0) and non-time shifted (1=0) observation vectors $x(kT_e)$, $\tilde{x}(kT_e)$, $x_{st}(kT_e)$ or $\tilde{x}_{d,st}(kT_e)$, and **in that** the reference signal s(kTe) is Doppler shifted and time shifted, that is, it is replaced by $s_m((k+l)T_e) = s(kT_e)$ exp[j2$\pi$m(k+l)/k].

14. The method according to any one of the preceding claims, **characterised in that** when the signals coming from the emitter, the reflector or the interferences are wideband for the antennae array used, which occurs as soon as the ratios $B_e/f_0$ ou $\pi DB_e/c$ exceed a few %, where D is the opening of the array, Be the equivalent bandwidth of the signal (considered to be included in the receiving band), f0 is the carrier of the signal and c is the propagation speed, one of the following variants of an embodiment is implemented:

- structuring the receiving band into several sub-bands, which are narrow for the array, implementing the processes that are the subject of the preceding claims, proceeding sub-band by sub-band,
- implementing a space-time receiving structure,

• in the event that the signal is no longer a narrow band for the array of sensors ($\pi$DBelc exceeds a few %): substituting the preceding space vectors $x_m((k+1)Te)$ with the space-time vectors at L time points:
$x_{m,st}((k+l)T_e) \triangle [x_m((k+(L-1)/2)T_e)^T,..., x_m((k -(L-1)/2)T_e)^T]^T$ if L is odd and
$x_{m,st}((k+l)T_e \triangle [x_{dm}((k+L/2T_e)^T,..,x_{dm}(k-L/2)T_e)^T]^T$ if L is even,
• in the event that the signal is also wideband in respect of the carrier (Be/f0 exceeding a few %) and in the event that the kinematic of the emitter or of the reflector requires consideration of the deformations induced on the replica signal s : introducing into the preceding processes not only the delay and Doppler variables but additional variables in the order 1, such as the delay compression and the Doppler compression on the duration of integration K, in the order 2, such as the time deviations of the preceding variables, etc, writing the signal $s_{l,m}$ that corresponds to the transformation of the original signal s by the time variables (delay-position, etc.) symbolised by 1 and the frequency variables (Doppler-kinematic, etc.) symbolised by m, and using the signal $s_{l,m}$ to implement the steps of the method according to the preceding claims.

15. The method according to any one of the preceding claims, **characterised in that** it comprises steps of conventional goniometry (high-resolution or other) or of reference goniometry from delay-distance/Doppler-kinematic or space/delay-distance/Doppler-kinematic hypotheses, comprising the implementation of a conventional or high-resolution goniometry technique:

   • either from observations $x_m((k+l)T_e)$, $\tilde{x}_m((k+l)T_e)$, $x_{m,st}((k+l)T_e)$ or $\tilde{x}_{dm,st}^{((k+l)Te)}$ associated with the distance/Doppler (1, m) power,
   • or from the results of the correlation with the emitted signal s(kTe) of the observations $x_m((k+l)T_e)$, $\tilde{x}_m((k+l)T_e)$, $x_{m,st}((k+l)T_e)$ or $\tilde{x}_{dm,st}((k+l)T_e)$ over intervals that are sub-multiples of K,
   • in the event that the directing vector s is known, after a possible space filtering of the observations limited to the space box s.

16. A device for measuring propagation, detecting and/or locating a fixed or mobile emitter or reflector in a system comprising N sensors receiving signals coming from the emitter or reflector, **characterised in that** it comprises at least one means that is designed to execute the steps of the method according to any one of claims 1 to 15.


**Patentansprüche**

1. Verfahren zum Ermitteln von einem oder mehreren Parametern der Impulsreaktion eines Ausbreitungskanals unter Beteiligung von Sendern, Reflektoren oder festen oder mobilen Sensoren, zum Detektieren und zum Ermitteln der Positions- und Bewegungsparameter dieser Sender und Reflektoren in einem System, das *N* Sensoren umfasst, die Signale empfangen, die von den Sendern oder von der Reflexion an den Reflektoren kommen, wobei *N* gleich oder größer als 2 ist, und das wenigstens die folgenden Schritte beinhaltet:

   - Benutzen der Kombination aus Raumanalyse und Verzögerung-Distanz/Doppler-Bewegungsanalyse zum Ermitteln einer Ambiguitätsfunktion,
   - Ermitteln wenigstens einer ausreichenden Statistik $\hat{C}(l, m, k)$, die der Korrelation zwischen dem bekannten Signal *s(kTe)* entspricht, entsprechend der komplexen Hüllkurve des gesendeten Signals, abgetastet während der Periode *Te,* betrachtet über eine Integrationsdauer von *K* Samples (Index *k=0,...,K-l),* das eine eventuelle Transformation in Verbindung mit den Hypothesen in Bezug auf die Positionen und Bewegungen der Sender, Empfänger und Reflektoren und in Bezug auf die Ausbreitungsfluktuationen erfährt, und dem Ausgang eines Raumfilters *w*(l, *m),* wobei *l* einen Satz von Zeithypothesen symbolisiert und wobei *m* einen Satz von Frequenzhypothesen symbolisiert, der als Eingang die Beobachtungen $x_m((k+l)T_e),$ $0{\leq}k{\leq}K\text{-}1$ benutzt, die ebenfalls während der Periode *Te* abgetastet wurden, Ermitteln der Werte des Paares (*l, m*) durch Vergleichen des Wertes der Statistik $\hat{C}(l, m, k)$ für das Paar (*l, m*) mit einem Detektionsschwellenwert, **dadurch gekennzeichnet, dass** das Verfahren für die Fälle, bei denen die durch *l* symbolisierten Zeitparameter auf eine Verzögerung oder eine Distanz reduziert werden und die durch *m* symbolisierten Bewegungsparameter auf einen Doppler oder eine relative Geschwindigkeit reduziert werden, wenigstens die folgenden Schritte beinhaltet:

   für jede Verzögerungshypothese *l* und jede Doppler-Hypothese *m,* wobei *m* ein Index der Variablen $x_m$ und $r_{xm}$s ist, wobei die Integrationsdauer maximal *KTe* ist, wobei die Auflösung und die Doppler-Abtasteilung bei *l/KTe* genommen werden können und die geschätzte Doppler-Verschiebung ist dann ein Vielfaches von *l/KT_e,* **gekennzeichnet durch** den Index *m=0, ... ,K-1,*

   - Schätzen des Vektors $\hat{r}_{x_ms}(lTe)$ von *K* bekannten Samples $s(kT_e)$ des gesendeten Signals und den K frequenzverschobenen Beobachtungen $x_m((k+l) T_e) = x((k+l) T_e) exp[-j2\pi m(k+l)/K],$ $0{\leq}k{\leq}K\text{-}1,$ anhand der Statistik:

$$\hat{r}_{x_ms}(lT_e) \quad \triangleq \quad \frac{1}{K} \sum_{k=0}^{K-1} x_m((k+l)T_e)\, s(kT_e)^*$$

   - Schätzen der Matrix $\hat{R}x_m^{(lTe)}$ von den *K* frequenzverschobenen Beobachtungen, $x_m((k+l) T_e) = x((k+l) T_e) exp[-j2\pi m(k+l)/K],$ $0{\leq}k{\leq}K\text{-}1,$ anhand der Statistik:

$$\hat{R}_{x_m(lTe)} \;\triangleq\; \frac{1}{K} \sum_{k=0}^{K-1} x_m((k+l)T_e)\; x_m((k+l)T_e)^{\dagger}$$

- Berechnen der ausreichenden Statistik $\hat{C}(l, m, K)\; \Delta\; (1/\hat{\pi}_s)\; \hat{r}_{ms}(lT_e)^{\dagger} R_{x_m}(lT_{ei})^{-1}\hat{r}_{x_m s}<lT_e)$ wobei $\hat{\pi}_s$ im Sinne der Kleinste-Quadrate-Schätzung der mittleren Leistung des bekannten Signals

$$\hat{\pi}_s = I\frac{1}{K} \sum_{k=0}^{K-1} /s(kT_e)/^2 \text{ definiert wird,}$$

wobei das Verfahren **dadurch** gekennzeichnet ist, dass es wenigstens die folgenden Schritte beinhaltet:
- Berechnen der ausreichenden Statistik

$$\hat{F}(l, m, s, K) \;=\; (1/\hat{\pi}_s)\; \frac{/s^{\dagger}\, \hat{R}_{x_m(lT_e)}^{-1}\, \hat{r}_{x_m s}(lT_e)/^2}{(s^{\dagger}\, \hat{R}_{x_m(lT_e)}^{-1}\, s)\,(1 - \hat{C}(l, m, K))}$$

wobei s der Richtungsvektor des vom Sender oder vom Reflektor kommenden Signals ist,
- Einstellen des Detektionsschwellenwertes für eine gegebene Fehlalarmwahrscheinlichkeit,
- Vergleichen des Wertes der Statistik $\hat{F}(l,m,sK)$ mit dem festen Detektionsschwellenwert, und falls dieser Schwellenwert überschritten wird, Feststellen der Detektion des Reflektors in der Distanz/Doppler ($l$, $m$) Box und der Raum-Box $s$,
- Schätzen der relativen Verzögerung und Distanz des Senders oder des Reflektors von $l$,
- Schätzen von Doppler und relativer Geschwindigkeit des Senders oder des Reflektors von $m$,
- Schätzen der Winkelposition des Senders oder des Reflektors von $s$.

2. Verfahren nach Anspruch 1, **dadurch gekennzeichnet, dass** in den komplexeren Fällen

2A) die Variablen und die Transformationen des durch die Bewegungen des Senders, des Empfängers oder des Reflektors sowie durch die Ausbreitungskanalfluktuationen induzierten Signals in die Definition der Zeitparameter wie die durch $l$ symbolisierten Verzögerungspositionen, in die Definition der Frequenzparameter wie die durch $m$ symbolisierte Doppler-Bewegung und in die des bekannten Signals $s$ bei jeder Hypothese $l$ und $m$ in Abhängigkeit von der Verzögerung-Position-Hypothese, der Doppler-Relativgeschwindigkeit-Hypothese, der Dauer der Integration der Verarbeitung, der äquivalenten Bandbreite des Signals, der äquivalenten Dauer des Signals und seiner Periodizität, wenn es während der Integrationsdauer der Verarbeitung pulsiert wird, der Fluktuation der Verzögerung über diese Dauer, der Fluktuation des Dopplers über diese Dauer eingeführt werden,
2B) das Signal $s_{l,m}$, das von der Transformation von s erhalten wird, in Abhängigkeit von der durch $l$ symbolisierten Zeithypothese und der durch $m$ symbolisierten Frequenzhypothese benutzt wird.

3. Verfahren nach Anspruch 2, **dadurch gekennzeichnet, dass** die Fluktuation der Verzögerung eine Fluktuation ist, die durch eine Zeitrampe in die erste Ordnung modelliert wird.

4. Verfahren nach Anspruch 2, **dadurch gekennzeichnet, dass** die Doppler-Fluktuation durch eine Doppler-Rampe in die erste Ordnung modelliert wird.

5. Verfahren nach einem der Ansprüche 1 und 2, **dadurch gekennzeichnet, dass** für die Detektion eines Senders oder eines Reflektors, dessen Signal höhere Interferenzen erfährt, ein Signal $x'_m((k+l)\,T_e)$ und ein Replikat s' anstatt des Eingangssignals $x_m((k+l)T_e)$ und des ursprünglichen Replikats s verwendet werden, wobei das Signal $x'_m((k+l)T_e)$ von dem Signal $x_m((k+l)T_e)$ erhalten wird und das Replikat $s'$ von dem ursprünglichen Replikat s oder von dem transformierten Replikat $s_{l,m}$ mittels Operationen erhalten wird, die Raum-Zeit-Filterungsverbesserer wie die folgenden benutzen:

5A) für jeden interferierenden Sender:

Schätzen der Impulsreaktion $g_{int}$ des Ausbreitungsfilters des Senders, der mit dem Empfänger nach einer Schätzung $S_{im}{''}$ seines gesendeten Signals $s_{int}$ durch die Minimierung des Kriteriums interferiert:

$$\hat{\varepsilon}_{int}(l_0,L) \triangleq \frac{1}{L} \cdot \sum_{0}^{L-1} \left| x((l_0+l)T_e) - g_{int}^{\dagger} S_{int,m,l} \right|^2$$

unter Berücksichtigung des Replikats $S_{im}''=(S_{int}*((l_0+l)T_e), S_{int}''((l_0+l)T_e), S_{int}''((l_0+l+1)T_e), ..., S_{int}'' ((l_0+l+L-L)T_e))^T$, das entweder durch volle vorherige Kenntnis des ursprünglichen interferierenden Signals, wobei $s_{int}''=s_{int}$, oder durch eine teilweise vorherige Kenntnis des ursprünglichen interferierenden Signals $s_{int}''=s_{int}$ auf einer Anzahl $K''$ von Samples während der Periode $Te$ erhalten wird, oder durch Demodulation/Entzerrung des ursprünglichen interferierenden Signals mit anderen der Fachperson bekannten Mitteln mit $s_{int}''=s_{int}$ oder unter Berücksichtigung des transformierten Replikats $S_{im}''=(_{Sint}*((l_0+l)T_e),S_{int}((l_0+l+1)T_e),...,S_{int}''((l_0+l+L-l)T_e))^T$ im Einklang mit einer Hypothese $l, m$ bei der Position und Bewegung des $s_{int}$ produzierenden interferierenden Senders;

5B) für einen oder mehrere interferierende Sender, fest oder mit bekannter Bewegung, die in Abhängigkeit von ihrer Frequenz- und Zeitstabilität ausgewählt werden,

Einführen unterschiedlicher Frequenzhypothesen in das Replikat $S_{int}$ und Nutzen der in dem Replikat vorliegenden Wiederholungsfälle, um über erhebliche Integrationslängen K die Frequenz- und Zeitabweichungen relativ zu dem interferierenden Sender fein zu schätzen, Schätzen von Abweichungen relativ zu dem interferierenden Sender der lokalen Oszillatoren, der Mischer und der Taktgeber des Empfangs- und Abtastsystems der zum Implementieren der Erfindung benutzten Signale.

6. Verfahren nach Anspruch 5, **dadurch gekennzeichnet, dass** in Schritt 5B:

das mit dem interferierenden Sender assoziierte Ausbreitungsfilter $g_{int}$ (Schritt 5A) aktualisiert wird, und

6A) für jeden interferierenden Sender:

eine Faltung des ursprünglichen $s_{int}$ oder transformierten $s_{intm},l$ interferierenden Signals durch das Ausbreitungsfilter $g_{int}$ ausgeführt wird, mit dem es assoziiert ist, wobei das von dieser Operation resultierende Signal von dem empfangenen Gesamtsignal subtrahiert wird,

6B) die Frequenz- und Zeitabweichungen kompensiert werden,

- entweder an dem Signal, das aus den vorhergehenden Operationen von $x_m((k+l)T_e)$ resultiert, um das Signal $x'_m((k+l)T_e)$ zu erzeugen, wobei s dann unverändert bleibt ($s'=s$),
- oder an dem in dem Verfahren verwendeten Replikatsignal s gemäß Anspruch 1, das dann zu s' wird, $s_m,l$ gemäß Anspruch 2, das dann zu $s_m,l'$ wird,

6C) die Schritte gemäß Anspruch 1 an $x'_m$ und s' implementiert werden,
6D) die Schritte gemäß Anspruch 2 an $x'_m$ und $s_{m,l}'$ implementiert werden.

7. Verfahren nach einem der Ansprüche 1, 2 und 5, **dadurch gekennzeichnet, dass** ein Beobachtungsvektor $\tilde{x}_m((k+l)T_e) \triangleq [x_m((k+l)T_e)^T, x_m((k+l)T_e)^{\dagger}]^T$ verwendet wird, der sich aus dem Beobachtungsvektor und seinem komplexen Konjugat zusammensetzt, und dadurch, dass die Schritte der Ansprüche 1 und 2 von $\tilde{x}m((k+l)T_e)$ anstatt von $x_m((k+l)T_e)$ ausgeführt werden.

8. Verfahren nach Anspruch 7, **dadurch gekennzeichnet, dass** darüber hinaus eine Nur-Rausch-Gesamtreferenz zur Verfügung steht, und dadurch, dass die Schritte der Ansprüche 1 und 2 mittels einer Schätzung der erweiterten Nur-Rausch-Gesamtmatrix $\hat{R}_{\tilde{b}T_m}(lT_e)$ implementiert werden, die über die Nur-Rausch-Referenzsamples erhalten werden, anstelle einer Schätzung der Korrelationsmatrix der erweiterten Beobachtungen $\hat{R}_{\tilde{x}_m}(lT_e)$. wobei $\tilde{b}_m((k+l)T_e) \triangleq [b_m((k+l)T_e)^T, b_m((k+l)T_e)^{\dagger}]^T$.

9. Verfahren nach einem der Ansprüche 1, 2, 3, 4 und 8, wobei die gesendeten Signale nach einer Derotation quasi-geradlinig und die Interferenzen nichtkreisförmig sind, oder wobei die Ausbreitungskanäle zeitlich verteilt sind, **dadurch gekennzeichnet, dass** Raum-Zeit-Vektoren verwendet werden, die für die quasi-geradlinigen Modulationen derotiert werden, oder nicht derotiert für die geradlinigen Modulationen bei $L$ Zeitpunkten $x_{dm,st}((k+l)T_e \triangleq [\tilde{x}_{dm}((k+(L-1)/2T_e)^T,..., \tilde{x}_{dm}((k-(L-1)/2)T_e)^T]^T$, wenn $L$ ungeradzahlig ist, und
$\tilde{x}_{dm,st}((k+l)T_e) \triangleq [\tilde{x}_{dm}((k+L/2)T_e)^T,..., x_{dm}((k-L/2T_e)^T]^T$, wenn $L$ geradzahlig ist,
wobei $x_{dm}((k+l)T_e) \triangleq [x_{dm}((k+l)T_e)^T, x_{dm}((k+l)T_e)^{\dagger}]^T$,

$$x_{dm}((k+l)T_e) \triangleq x_d((k+l)T_e) \exp[-j2\pi m(k+l)/K],$$

$x_d(t) \triangleq j^{-t/T} x(t)$ *und T die* Symboldauer ist.

**10.** Verfahren nach einem der Ansprüche 1, 2, 3, 6, 7 und 8, **dadurch gekennzeichnet, dass** eine Nur-Rausch-Gesamtreferenz verfügbar ist, und dadurch, dass die Schritte von Anspruch 1, 2 oder 6 von einer Schätzung der Nur-Rausch-Gesamtmatrix $\hat{R}_{bTm}^{(lTe)}$, die über die Nur-Rausch-Referenzsamples erhalten wird, anstatt von einer Schätzung der Korrelationsmatrix der Beobachtungen $\hat{R}_{xm}(lT_e)$. implementiert werden.

**11.** Verfahren nach einem der Ansprüche 1, 2, 3, 6, 7 und 8, wobei der Richtungsvektor des Reflektors für die gesendeten geradlinigen Signale und die potentiell nichtkreisförmigen Interferenzen bekannt ist, **dadurch gekennzeichnet, dass** es wenigstens die folgenden Schritte beinhaltet:

Berechnen der ausreichenden Statistik:

$$\hat{C}_{nc}(l, m, K) \triangleq (1/\hat{\pi}_S) \; \hat{r}_{\tilde{x}ms}(lT_e)^{\dagger} \; \hat{R}_{\tilde{x}m}(lT_e)^{-1} \hat{r}_{\tilde{x}ms}(lT_e)$$

Konstruieren einer Matrix

$$M \triangleq \begin{pmatrix} s & 0 \\ 0 & s^* \end{pmatrix}$$

Konstruieren einer Statistik

$$\hat{F}_{nc}(l, m, s, K) = (1/\hat{\pi}_S).$$

$$\frac{\hat{r}_{\tilde{x}ms}(lT_e)^{\dagger} \; \hat{R}_{\tilde{x}m}(lT_e)^{-1} \, M \, [M^{\dagger} \; \hat{R}_{\tilde{x}m}(lT_e)^{-1} M \,]^{-1} \, M^{\dagger} \; \hat{R}_{\tilde{x}m}(lT_e)^{-1} \hat{r}_{\tilde{x}ms}(lT_e)}{1 - \hat{C}_{nc}(l, m, K)}$$

Einstellen der Detektionsschwelle für eine gegebene Fehlalarmwahrscheinlichkeit,
Vergleichen des Wertes der Statistik $\hat{F}nc(l, m, s, K)$ mit dem Schwellenwert und Detektieren des Senders oder des Reflektors in der Distanz/Doppler-Box ($l$, $m$) und der Raum-Box s, wenn der Schwellenwert überschritten wird,
Schätzen der relativen Verzögerung und Distanz des Senders oder des Reflektors von $l$,
Schätzen von Doppler und relativer GeschwindigkeitBewegung des Senders oder des Reflektors von $m$,
Schätzen der Winkelposition des Senders oder des Reflektors von s.

**12.** Verfahren nach einem der Ansprüche 1, 2, 3, 7, 8 und 9, **dadurch gekennzeichnet, dass** darüber hinaus eine Nur-Rausch-Gesamtreferenz verfügbar ist, und **dadurch gekennzeichnet, dass** die Schritte von Anspruch 12 mit einer Schätzung der erweiterten Nur-Rausch-Gesamtmatrix $\tilde{R}_{bTm}(lT_e)$, die über die Nur-Rausch-Referenzsamples erhalten wird, anstatt einer Schätzung der Korrelationsmatrix der erweiterten Beobachtungen $\tilde{R}_{xm}(lT_e)$ implementiert werden, wobei $\tilde{b}_{nt}((k+l)T_e) \triangleq$ - $[b_m(k+l)T_e)^T, b_m((k+l)T_e)^{\dagger}]^T$ ist.

**13.** Verfahren nach einem der vorherigen Ansprüche, **dadurch gekennzeichnet, dass** die Doppler-verschobenen und zeitverschobenen Beobachtungsvektoren $x_m((k+l)T_e)$, $\tilde{x}((k+l)T_e)$, $x_{m,st}((k+l)T_e)$ oder $\tilde{x}_{dm.st}((k+l)T_e)$ jeweils durch nicht Doppler-verschobene ($m=0$) und nicht zeitverschobene ($l$-$0$) Beobachtungsvektoren $x(kT_e)$, $\tilde{x}(kT_e)$, $x_{st}(kT_e)$ oder $\tilde{x}_{d,st}(kT_e)$, ersetzt werden, und dadurch, dass das Referenzsignal $s(kT_e)$ Doppler-verschoben und zeitverschoben ist, d.h. es wird durch $s_m((k+l)T_e) = s(kT_e) \exp[j2\pi m(k+l)/K]$ ersetzt.

**14.** Verfahren nach einem der vorherigen Ansprüche, **dadurch gekennzeichnet, dass**, wenn von dem Sender, dem Reflektor oder den Interferenzen kommende Signale für das verwendete Antennenfeld breitbandig sind, was auftritt, sobald die Verhältnisse $B_e/f_o$ oder $\pi DB_e/c$ ein paar % überschreiten, wobei $D$ die Öffnung des Feldes ist, $B_e$ die äquivalente Bandbreite des Signals (das als im Empfangsband enthalten betrachtet wird) ist, $f_0$ der Träger des Signals und $c$ die Ausbreitungsgeschwindigkeit sind, eine der folgenden Varianten einer Ausgestaltung implementiert wird:

- Strukturieren des Empfangsbandes in mehrere Subbänder, die für das Feld eng sind; Durchführen der Prozesse, die Gegenstand der vorherigen Ansprüche sind, Subband für Subband,
- Implementieren einer Raum-Zeit-Empfangsstruktur,

• falls das Signal kein Schmalband für das Feld von Sensoren mehr ist ($\pi DB_e/c$

überschreitet ein paar %): Substituieren der vorhergehenden Raumvektoren $x_m((k+l)T_e)$ mit den Raum-Zeit-Vektoren bei $L$ Zeitpunkten:

$x_{m,s}((k+l)T_e) \triangleq [x_m((k+(L-1)/2)T_e)^T,..., x_m((k-(L-1)/2)T_e)^T]^T$ wenn $L$ ungeradzahlig ist, und
$x_{m,s}((k+l)T_e) \triangleq [x_{dm}((k+L/2)T_e)^T,....,x_{dm}((k-L/2)T_e)^T]^T$ wenn $L$ geradzahlig ist,
• falls das Signal in Bezug auf den Träger ebenfalls breitbandig ist ($B_e/f_0$ überschreitet ein paar %) und falls die Bewegung des Senders oder des Reflektors eine Berücksichtigung der auf das Replikatsignal $s$ induzierten Verformungen erfordert: Einführen nicht nur der Verzögerungs- und Doppler-Variablen in die vorhergehenden Prozesse, sondern auch zusätzlicher Variablen in die Ordnung $l$, wie die Verzögerungskompression und die Doppler-Kompression auf der Integrationsdauer $K$, in die Ordnung 2, wie die zeitlichen Abweichungen der vorhergehenden Variablen usw., Schreiben des Signals $s_{l,m}$ entsprechend der Transformation des ursprünglichen Signals s durch die durch $l$ symbolisierten Zeitvariablen (Verzögerungsposition usw.) und die durch $m$ symbolisierten Frequenzvariablen (Doppler-Bewegung usw.), und Verwenden des Signals $s_{l,m}$ zum Ausführen der Schritte des Verfahrens nach einem der vorherigen Ansprüche.

15. Verfahren nach einem der vorherigen Ansprüche, **dadurch gekennzeichnet, dass** es herkömmliche Goniometrieschritte (Hochauflösung oder andere) oder Referenzgoniometrie von Verzögerung-Distanz/Doppler-Bewegung- oder Raum/Verzögerung-Distanz/Doppler-Bewegung-Hypothesen beinhaltet, die die Implementation einer konventionellen oder Hochauflösungs-Goniometrietechnik beinhalten:

• entweder von Beobachtungen $x_m((k+l)T_e)$, $\tilde{x}m((k+l)T_e)$, $x_{m,st}((k+l)T_e)$ oder $x_{dm,st}(k+l)$ $T_e)$ in Verbindung mit der Distanz/Doppler ($l, m$) Energie,
• oder von den Ergebnissen der Korrelation mit dem gesendeten Signal $s(kT_e)$ der Beobachtungen $x_m(k+l)T_e)$, $\tilde{x}_m((k+l)T_e)$, $x_{m,st}((k+l)T_e)$ oder $\tilde{x}_{dm,st}((k+l)T_e)$ über Intervalle, die Subvielfache von $K$ sind,
• falls der Richtungsvektor s bekannt ist, nach einer möglichen Raumfilterung der Beobachtungen, die auf die Raum-Box s begrenzt sind.

16. Vorrichtung zum Messen von Ausbreitung, Detektion und/oder Ortung eines festen oder mobilen Senders oder Reflektors in einem System, das $N$ Sensoren umfasst, die von dem Sender oder dem Reflektor kommende Signale empfangen, **dadurch gekennzeichnet, dass** sie wenigstens ein Mittel beinhaltet, das so ausgelegt ist, dass es die Schritte des Verfahrens nach einem der Ansprüche 1 bis 15 ausführt.

EP 2 176 680 B1

**FIG.1**

$x_m((k+l)T_e)$  $\hat{w}(l, m)$  1

$C_i$

$y_m((k+l)T_e)$  3  4  5

$\hat{C}(l, m, K)$  $\gtrless \beta$

$\sum$  2

$s(kT_e)$

$\hat{w}(l, m) = \hat{R}_{xm}(lT_e)^{-1}\, \hat{r}_{xms}(lT_e)$

**FIG.3**

$\tilde{x}_m((k+l)T_e)$  $\hat{\tilde{w}}(l, m)$  1

$C_i$

$y_m((k+l)T_e)$  10  11

$\hat{C}_{nc}(l, m, K)$  $\gtrless \beta$

$\sum$  7

$s(kT_e)$

$\hat{\tilde{w}}(l, m) = \hat{R}_{\tilde{x}m}(lT_e)^{-1}\, \hat{r}_{\tilde{x}ms}(lT_e)$

6

Pré-traitement du "signal utile" x subissant les interférences

Filtrage en bande de base de x corrections Doppler / horloges sur x

Soustraction de la contribution totale du signal interférent à x $s_{int} * g_{int}$

Traitement du "signal utile" x' après soustraction de la contribution totale du signal interférent

Signal d'entrée modifié $x' = x - g_{int} * s_{int}$

Déviation d'OL et d'horloge

Signal de référence $S_{int}$ Estimée de canal $g_{int}$ correspondante

Traitement du signal interférent $(S_{int})$

Filtrage en bande de base de $s_{int}$ Synchronisation du trajet direct de $s_{int}$ Estimation des déviations d'OL et d'horloge en utilisant $s_{int}$

Corrections Doppler/horloges sur $s_{int}$

Démodulation/égalisation du signal $s_{int}$ Estimation fine du canal de propagation $g_{int}$ en utilisant $s_{int}$ ( Min $\hat{\varepsilon}'_{int}$ $(l_0,L)$ )

Signal de référence d'origine s

Signal de référence modifié s'

Calcul de la fonction d'ambiguïté espace / temps / Doppler en utilisant x' et s' (Max C(m,l,K)) => détection anti-brouillée au retard $l_0$ et au Doppler $m_0$

Traitement de la fausse alarme

Traitement de goniométrie au retard $l_0$ et au Doppler $m_0$

Non correspondance entre OL et horloge

FIG.2

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1500951 A


**Littérature non-brevet citée dans la description**

- **H.L. VAN TREES.** Detection, Estimation and Modulation Theory. Wiley and Sons, 1971
- **J. DARRICAUT.** Physique et Théorie du radar. 1993
- **R.A. MONZINGO ; T.W MILLER.** Introduction to adaptive arrays. John Wiley and sons, 1981
- **W.S. BURDIC.** Underwater Acoustic System Analysis. Prentice Hall Sig. Proc, 1999